# EUROPEAN PATENT APPLICATION

(11) **EP 4 793 663 A1**
(43) Date of publication of application: **19.08.2026**
(21) Application number: 25761687.0
(22) Date of filing: 23.01.2025
(51) Int. Cl.: G01S 13/88, G01S 7/02, G01S 13/34

(54) **DOOR OPENING/CLOSING DETECTION DEVICE AND DOOR OPENING/CLOSING DETECTION METHOD**

(30) Priority: 01.03.2024 JP 2024031730
(71) Applicant: Murata Manufacturing Co., Ltd., Nagaokakyo-shi, Kyoto 617-8555 (JP)
(72) Inventor: ASANO, Kosei, Nagaokakyo-shi, Kyoto 617-8555 (JP); YAMAGUCHI, Kenta, Nagaokakyo-shi, Kyoto 617-8555 (JP)
(74) Representative: Zimmermann, Tankred Klaus
(86) International application number: PCT/JP2025/002115
(87) International publication number: WO 2025/182364

(57) **Abstract**

Provided is a door opening/closing detection apparatus and a door opening/closing detection method that can properly determine entry to and exit from a room by detecting an open/closed state of a door. A door opening/closing detection apparatus includes: a sensor capable of obtaining information on a relative position of a target; an arrival direction estimation **unit** configured to estimate a relative distance, a relative speed, and a relative angle of the target to the sensor based on transmission and reception signals of the sensor; and a determination processing **unit** configured to determine an open/closed state of a door based at least on the relative distance and the relative speed.

## Description

### Technical Field

The present invention relates to a door opening/closing detection apparatus and a door opening/closing detection method.

### Background Art

Detecting opening and closing of a window or a door using a magnetic detection sensor is a typical method employed to, for example, prevent crimes or improve security (for example, Patent Document 1). Meanwhile, as one of the solutions for watching over people in a facility such as a nursing home, there are demands for determining the presence and absence of people indoors by detecting the open/closed state of a door and controlling actuation of a system based on a result of the determination. For such usage, for example, as a method for determining whether or not a user is in a room where a communication apparatus is installed, a method and an apparatus for determining whether or not a user is in a room by detecting the opening/closing angle of a door have been disclosed (for example, Patent Document 2).

Specifically, in the method and apparatus for determining whether a user is in a room described in Patent Document 2, the intensity of a signal is measured using a door sensor installed near a door, and the degree of opening/closing of the door is determined based on the intensity of the signal.

### Citation List

### Patent Document

Patent Document 1: Japanese Unexamined Patent Application Publication No. 2006-208307
Patent Document 2: International Publication No. WO2017/091053

### Summary of Invention

### Technical Problem

To apply the technique described in Patent Document 1 or Patent Document 2 to, for example, a room with a plurality of doors, the magnetic detection sensor or the door sensor needs to be provided for each of the plurality of doors. Also, especially with the technique described in Patent Document 2, which makes a determination based only on the intensity of a signal obtained by a door sensor, reflection from a non-door object may be erroneously determined as an opening/closing operation of the door.

The present disclosure has been made in view of the above and aims to achieve a door opening/closing detection apparatus and a door opening/closing detection method that can properly determine entry to and exit from a room by detecting an open/closed state of a door.

### Solution to Problem

A door opening/closing detection apparatus according to one aspect of the present disclosure includes: a sensor capable of obtaining information on a relative position of a target; an arrival direction estimation unit configured to estimate a relative distance, a relative speed, and a relative angle of the target to the sensor based on transmission and reception signals of the sensor; and a determination processing unit configured to determine an open/closed state of a door based at least on the relative distance and the relative speed.

With this configuration, characteristics of a door's opening operation and closing operation with no one in the room are detected so that a duration from the opening operation to the closing operation can be estimated as a duration during which someone is in the room.

A door opening/closing detection method according to another aspect of the present disclosure includes: an estimation step of estimating, based on transmission and reception signals of a sensor capable of obtaining information on a relative position of a target, a relative distance, a relative speed, and a relative angle of the target to the sensor, and a determination step of determining an open/closed state of a door based at least on the relative distance and the relative speed.

With this configuration, characteristics of a door's opening operation and closing operation with no one in the room are detected so that a duration from the opening operation to the closing operation can be estimated as a duration during which someone is in the room.

### Advantageous Effects of Invention

The present disclosure can achieve a door opening/closing detection apparatus and a door opening/closing detection method that can properly determine entry to and exit from a room by detecting an open/closed state of a door.

### Brief Description of Drawings

[Fig. 1] Fig. 1 is a block diagram showing a schematic configuration of a door opening/closing detection apparatus according to Embodiment 1.
[Fig. 2] Fig. 2 is a diagram showing a specific example of processing by an arrival direction estimation unit according to Embodiment 1.
[Fig. 3] Fig. 3 is a diagram showing a first specific example of an opening/closing detection target of the door opening/closing detection apparatus according to Embodiment 1.
[Fig. 4] Fig. 4 is a diagram showing example temporal transitions of the relative distance and the relative speed of a target obtained within an opening/closing detection range.
[Fig. 5] Fig. 5 is a flowchart showing a first example of door opening/closing determination processing.
[Fig. 6] Fig. 6 is a sub-flowchart showing a first example of door opening determination processing.
[Fig. 7] Fig. 7 is a conceptual diagram showing example buffer values of door opening determination counts stored in a storage unit.
[Fig. 8] Fig. 8 is a sub-flowchart showing a first example of door closing determination processing.
[Fig. 9] Fig. 9 is a conceptual diagram showing example buffer values of door closing determination counts stored in the storage unit.
[Fig. 10] Fig. 10 is a flowchart showing a second example of the door opening/closing determination processing.
[Fig. 11] Fig. 11 is a sub-flowchart showing a second example of the door opening determination processing.
[Fig. 12] Fig. 12 is a sub-flowchart showing a second example of the door closing determination processing.
[Fig. 13] Fig. 13 is a diagram showing a second specific example of an opening/closing detection target of the door opening/closing detection apparatus according to Embodiment 1.
[Fig. 14] Fig. 14 is a flowchart showing a third example of the door opening/closing determination processing.
[Fig. 15] Fig. 15 is a sub-flowchart showing a third example of the door opening determination processing.
[Fig. 16] Fig. 16 is a sub-flowchart showing a third example of the door closing determination processing.
[Fig. 17] Fig. 17 is a flowchart showing a fourth example of the door opening/closing determination processing.
[Fig. 18] Fig. 18 is a sub-flowchart showing a fourth example of the door opening determination processing.
[Fig. 19] Fig. 19 is a sub-flowchart showing a fourth example of the door closing determination processing.
[Fig. 20] Fig. 20 is a block diagram showing a schematic configuration of a door opening/closing detection apparatus according to Embodiment 2.
[Fig. 21] Fig. 21 is a diagram showing a specific example of processing by an arrival direction estimation unit according to Embodiment 2.
[Fig. 22A] Fig. 22A is a diagram showing a specific example of an opening/closing detection target of the door opening/closing detection apparatus according to Embodiment 2.
[Fig. 22B] Fig. 22B is a diagram showing a specific example of an opening/closing detection target of the door opening/closing detection apparatus according to Embodiment 2.
[Fig. 23] Fig. 23 is a diagram showing an example power distribution in a distance direction.
[Fig. 24] Fig. 24 is a flowchart showing a fifth example of the door opening/closing determination processing.
[Fig. 25] Fig. 25 is a sub-flowchart showing an example of door open/closed state transition determination processing.

### Description of Embodiments

A door opening/closing detection apparatus and a door opening/closing detection method according to embodiments are described in detail below based on the drawings. Note that the present disclosure is not limited by these embodiments.

### (Embodiment 1)

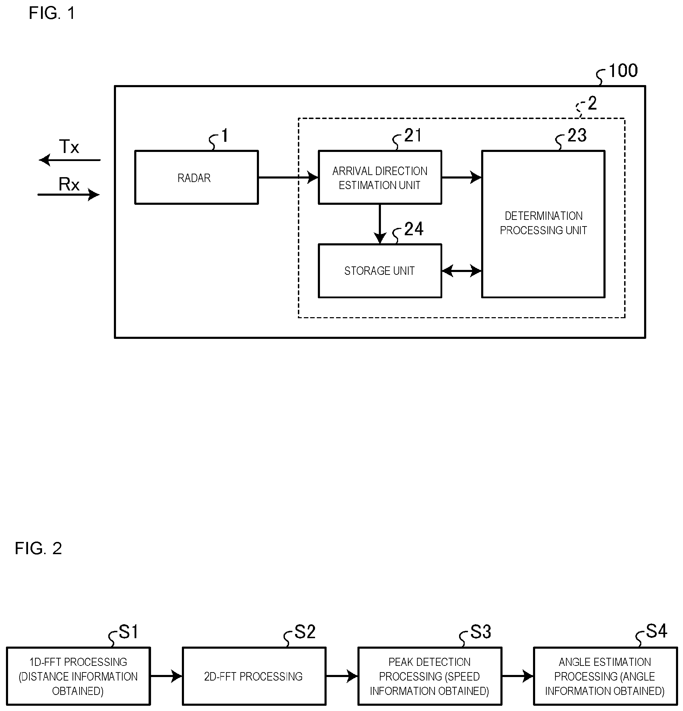

Fig. 1 is a block diagram showing a schematic configuration of a door opening/closing detection apparatus according to Embodiment 1. A door opening/closing detection apparatus 100 according to Embodiment 1 includes a radar 1 and a processor 2. The processor 2 includes an arrival direction estimation unit 21, a determination processing unit 23, and a storage unit 24.

In the configuration of the door opening/closing detection apparatus 100 according to Embodiment 1, the radar 1 is a radar capable of obtaining positional information on a monitor target (hereinafter also referred to as a "target") based on transmission and reception signals, and the radar 1 includes, for example, a plurality of transmission antennas and reception antennas and uses the frequency modulated continuous wave (FMCW) method or the fast chirp modulation (FCM) method. Because a radar using the FMCW method and a radar using the FCM method are already known, their detailed descriptions may be omitted.

In the present disclosure, positional information that the radar 1 can obtain includes distance information as information on the relative distance between a target and the radar 1, speed information as information on the speed of a target relative to the radar 1, and angle information as information on the angle of a target relative to the radar 1. Note that the present disclosure can be applied widely to sensors capable of estimating positional information on a target using electromagnetic waves (including light) or sonic waves.

The radar 1 emits a transmitted wave Tx to a target and receives a reflected wave Rx of the transmitted wave Tx, thereby obtaining an intermediate-frequency (IF) signal.

More specifically, for example, a radar using the FMCW method transmits a chirp signal with linear frequency modulation as the transmitted wave Tx at a predetermined frame period and receives the reflected wave Rx reflected by a target. Then, the reflected wave Rx obtained in frame units is combined with the transmitted wave Tx and generated into an IF signal.

The arrival direction estimation unit 21 estimates the relative distance, relative speed, and relative angle of each target based on the IF signal obtained by the radar 1 and outputs them.

Fig. 2 is a diagram showing a specific example of processing by the arrival direction estimation unit according to Embodiment 1. The arrival direction estimation unit 21 according to Embodiment 1 obtains distance information by executing distance fast Fourier transform (FFT) processing (hereinafter also referred to as "1D-FFT processing") on the IF signal outputted from the transmission/reception unit (Step S1) and after that executes speed FFT processing (hereinafter also referred to as "2D-FFT processing") on a complex signal obtained by the 1D-FFT processing (Step S2).

The arrival direction estimation unit 21 then obtains speed information by executing peak detection processing on a result of the 2D-FFT processing (Step S3), and after that obtains angle information on the target by executing angle estimation processing based on the distance information and the speed information (Step S4).

Note that the processing by the arrival direction estimation unit 21 shown in Fig. 2 is an example, and the present disclosure is not limited by the processing by the arrival direction estimation unit 21.

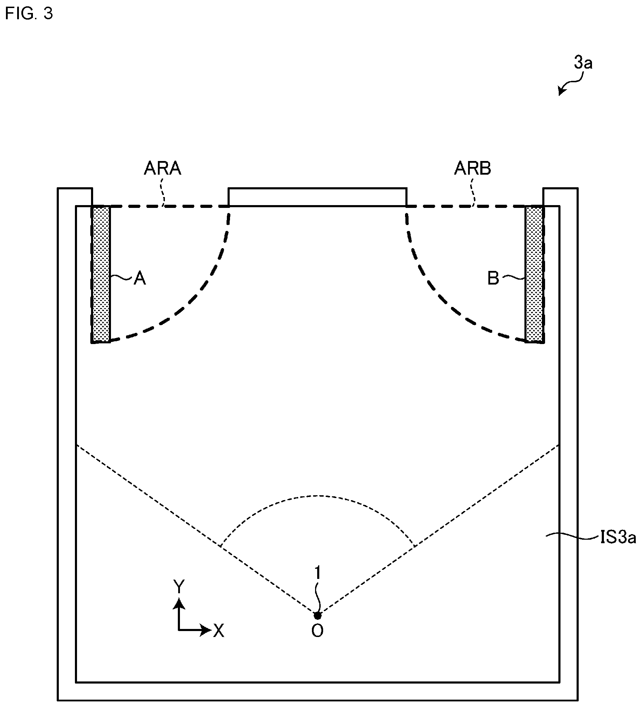

Fig. 3 is a diagram showing a first specific example of an opening/closing detection target of the door opening/closing detection apparatus according to Embodiment 1. As an example, Fig. 3 shows a room 3a with two doors A and B provided within the detection range of the radar 1, the origin O of which is the installation position of the radar 1. In the first specific example shown in Fig. 3, the doors A and B provided to the room 3a are in-swing doors that open inward relative to an indoor space IS3a.

In Fig. 3, the X-direction represents the direction in which the plurality of transmission antennas and reception antennas of the radar 1 are arrayed, and the Y-direction represents a direction perpendicular to the direction in which the plurality of transmission antennas and reception antennas of the radar 1 are arrayed.

In the present disclosure, as described earlier, the radar 1 is an FMCW radar or an FCM radar and can obtain positional information (distance information, speed information, and angle information) on each target. Storing such positional information different for each target allows a plurality of doors to be set as opening/closing detection targets, as shown in Fig. 3. Specifically, in the example shown in Fig. 3, the doors A and B can be set as opening/closing detection targets.

As shown in Fig. 3, in a case where the doors A and B provided to the room 3a are in-swing doors that open inward relative to the indoor space IS3a, when the door A or B is moving in an opening direction, the target corresponding to the door A or B moves in a direction approaching the radar 1, and when the door A or B is moving in a closing direction, the target corresponding to the door A or B moves in a direction away from the radar 1.

When a target is approaching the radar 1, the relative speed of the target is a negative value. When a target is moving away from the radar 1, the relative speed of the target is a positive value. When a target is still, the relative speed of the target is zero.

In the example shown in Fig. 3, the storage unit 24 has stored therein the opening/closing detection range of each door whose opening and closing are to be detected (hereinafter also referred to as a "door for opening/closing detection"), and the correspondences between the moving direction and the speed of the door for opening/closing detection. The opening/closing detection range of a door for opening/closing detection preferably includes at least the range of motion of the door for opening/closing detection (the range in which the door for opening/closing detection moves when the door is opened and closed).

Specifically, for example, in the example shown in Fig. 3, the storage unit 24 has stored therein an opening/closing detection range ARA of the door A and the correspondences between the moving direction and the speed of the door A.

More specifically, the storage unit 24 has stored therein settings indicating that the relative speed of the target corresponding to the door A is a negative value when the door A is moving in the opening direction and is a positive value when the door A is moving in the closing direction.

Also, for example, in the example shown in Fig. 3, the storage unit 24 has stored therein an opening/closing detection range ARB of the door B and the correspondences between the moving direction and the speed of the door B.

More specifically, the storage unit 24 has stored therein settings indicating that the relative speed of the target corresponding to the door B is a negative value when the door B is moving in the opening direction and is a positive value when the door B is moving in the closing direction.

Note that the present disclosure is not limited to the example shown in Fig. 3 where, in a case where a door for opening/closing detection (the door A or B) is an in-swing door, the relative speed of a target corresponding to the door for opening/closing detection is a negative value when the door for opening/closing detection is moving in the opening direction and is a positive value when the door for opening/closing detection is moving in the closing direction.

Also, although the opening/closing detection ranges ARA and ARB of the doors A and B are depicted by broken lines in Fig. 3, the opening/closing detection ranges of the doors for opening/closing detection are not limited to the mode shown in Fig. 3. A mode may be employed where the motion range of each door for opening/closing detection is obtained in advance and is set as the opening/closing detection range of the door for opening/closing detection. Alternatively, instead of the opening/closing detection range set along the motion range as shown, a substantially quadrangular opening/closing detection range or a substantially staircase-shaped opening/closing detection range along the arc described by a swinging-side edge portion of the door for opening/closing detection may be set as long as the range includes at least the motion range of the door for opening/closing detection.

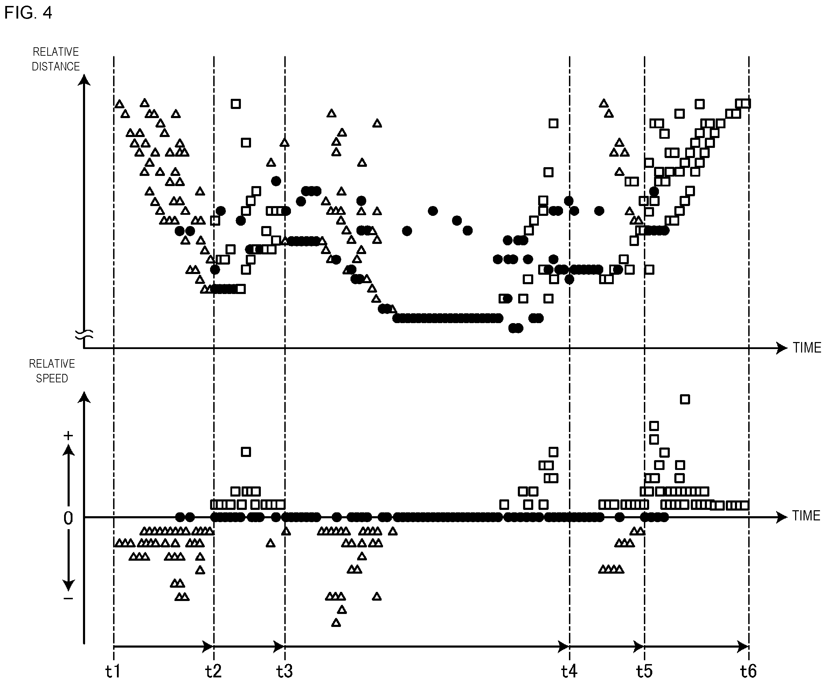

Fig. 4 is a diagram showing example temporal transitions of the relative distance and the relative speed of a target obtained within the opening/closing detection range. Fig. 4 shows example temporal transitions of the relative distance and the relative speed of targets in a case where there is one door for opening/closing detection and the door for opening/closing detection is an in-swing door. Also, example temporal transitions from when a person enters the room to when they exit the room are shown in Fig. 4.

The triangular dots in Fig. 4 denote a target whose relative speed is a negative value (-) within the opening/closing detection range of the door for opening/closing detection, the black circular dots in Fig. 4 denote a target whose relative speed is zero (0) within the opening/closing detection range of the door for opening/closing detection, and the square dots in Fig. 4 denote a target whose relative speed is a positive value (+) within the opening/closing detection range of the door for opening/closing detection.

Specifically, in the example temporal transitions shown in Fig. 4, from timepoint t1 to timepoint t2, a person outside the room opens the in-swing door, and from timepoint t2 to timepoint t3, the person enters the room through the opened door for opening/closing detection and closes the door for opening/closing detection from inside. Then in the example shown, from timepoint t4 to timepoint t5, the person in the room opens the in-swing door and exits the room through the opened door for opening/closing detection, and from timepoint t5 to timepoint t6, the person who has exited the room closes the in-swing door. Thus, in the example temporal transitions shown in Fig. 4, no one is inside the room before timepoint t1 and after timepoint t6, a period from timepoint t1 to timepoint t3 represents a room entry process in which a person enters the room, a period from timepoint t3 to timepoint t4 represents a period in which a person is inside the room, and a period from timepoint t4 to timepoint t6 represents a room exit process in which a person exits the room.

In the above-described room entry process in which a person enters the room, when the person outside the room opens the in-swing door from timepoint t1 to timepoint t2, the likelihood of a target whose speed is a positive value or zero existing in the opening/closing detection range of the door for opening/closing detection at a closer distance than a target whose speed is a negative value is characteristically low.

Also, in the above-described room exit process in which a person exits the room, when the person who has exited the room closes the in-swing door from timepoint t5 to timepoint t6 after exiting the room, the likelihood of a target whose relative speed is a negative value or zero existing in the opening/closing detection range of the door for opening/closing detection at a closer relative distance than a target whose relative speed is a positive value is characteristically low.

These characteristics depend on the positional relations between the door and the person relative to the radar 1, or in other words, whether an object closest to the radar 1 is a door or a person. In other words, by detecting the characteristic temporal transitions of targets described above, a door opening/closing process when there is no one in the room can be detected.

The following describes a specific example of door opening/closing determination processing performed in a case where the door for opening/closing detection is an in-swing door.

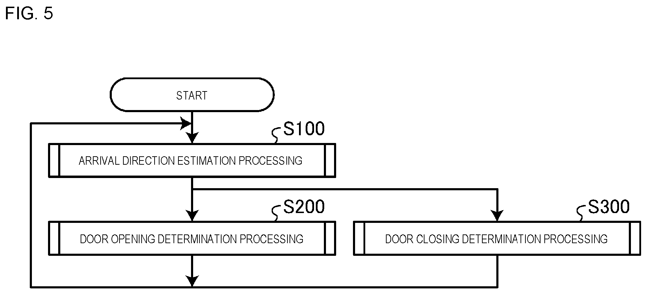

Fig. 5 is a flowchart showing a first example of the door opening/closing determination processing. Fig. 5 shows a specific example of the door opening/closing determination processing performed in a case where the door for opening/closing detection is an in-swing door. Note that, for ease of description, the following describes processing performed in a case where there is a single door for opening/closing detection.

In the first example of the door opening/closing determination processing shown in Fig. 5, the door opening/closing detection apparatus 100 according to Embodiment 1 executes arrival direction estimation processing (see Fig. 2) (Step S100) to obtain the relative distance, relative speed, and relative angle of each target, and after that executes door opening determination processing for detecting a process of the in-swing door opening (Step S200) and door closing determination processing for detecting a process of the in-swing door closing (Step S300) in parallel. The door opening/closing determination processing shown in Fig. 5 is executed at a predetermined frame period at which the radar 1 obtains an IF signal.

In Embodiment 1, the arrival direction estimation processing (Step S100) is processing executed by the arrival direction estimation unit 21 of the processor 2. The arrival direction estimation unit 21 stores the obtained relative distance, relative speed, and relative angle of each target in the storage unit 24.

Also, in the first example of the door opening/closing determination processing shown in Fig. 5, the door opening determination processing (Step S200) and the door closing determination processing (Step S300) are processing executed by the determination processing unit 23 of the processor 2.

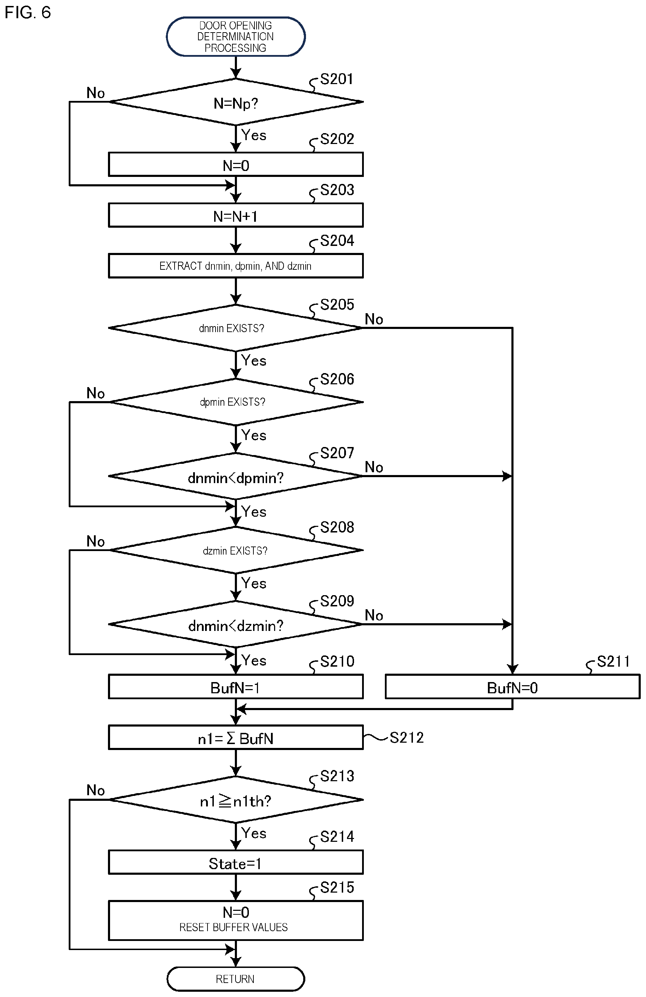

First, the door opening determination processing (Step S200) is described with reference to Fig. 6. Fig. 6 is a sub-flowchart showing a first example of the door opening determination processing. The door opening determination processing shown in Fig. 6 is on the assumption that a door opening determination frame count Np and a door opening determination threshold n1th (n1th ≤ Np) are preset and stored in the storage unit 24.

The determination processing unit 23 determines whether a door opening determination count N equals the door opening determination frame count Np (Step S201), and if N does not equal Np (Step S201; No), the determination processing unit 23 sets N to N + 1 (Step S203). If N equals Np (Step S201; Yes), the determination processing unit 23 resets N to 0 (Step S202) and sets N to N + 1 (Step S203).

The determination processing unit 23 refers to the relative distance, relative speed, and relative angle of each target stored in the storage unit 24 and extracts a minimum distance dnmin of targets whose relative speed is a negative value, a minimum distance dpmin of targets whose relative speed is a positive value, and a minimum distance dzmin of targets whose relative speed is zero within the preset opening/closing detection range of the door for opening/closing detection (Step S204).

The determination processing unit 23 first determines whether the minimum distance dnmin of targets whose relative speed is a negative value exists (Step S205), or in other words, whether a target whose relative speed is a negative value exists in the opening/closing detection range of the door for opening/closing detection.

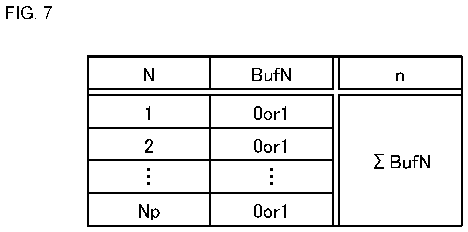

If the minimum distance dnmin of targets whose relative speed is a negative value does not exist (Step S205; No), or in other words, if a target whose relative speed is a negative value does not exist in the opening/closing detection range of the door for opening/closing detection, the determination processing unit 23 stores a false value "0" in the storage unit 24 as a buffer value BufN of the door opening determination count N (BufN = 0) (Step S211). Fig. 7 is a conceptual diagram showing example buffer values of door opening determination counts stored in the storage unit.

If the minimum distance dnmin of targets whose relative speed is a negative value exists (Step S205; Yes), the determination processing unit 23 next determines whether the minimum distance dpmin of targets whose relative speed is a positive value exists (Step S206), or in other words, whether a target whose relative speed is a positive value exists in the opening/closing detection range of the door for opening/closing detection.

If the minimum distance dpmin of targets whose relative speed is a positive value exists (Step S206; Yes), the determination processing unit 23 determines whether the minimum distance dnmin of targets whose relative speed is a negative value is smaller than the minimum distance dpmin of targets whose relative speed is a positive value (Step S207). If the minimum distance dnmin of targets whose relative speed is a negative value is equal to or greater than the minimum distance dpmin of targets whose relative speed is a positive value (Step S207; No), the determination processing unit 23 stores a false value "0" in the storage unit 24 as the buffer value BufN of the door opening determination count N (BufN = 0) (Step S211).

If the minimum distance dpmin of targets whose relative speed is a positive value does not exist (Step S206; No) or, in other words, if a target whose relative speed is a positive value does not exist in the opening/closing detection range of the door for opening/closing detection, or if the minimum distance dpmin of targets whose relative speed is a positive value exists (Step S206; Yes) and also if the minimum distance dnmin of targets whose relative speed is a negative value is smaller than the minimum distance dpmin of targets whose relative speed is a positive value (Step S207; Yes), the determination processing unit 23 next determines whether the minimum distance dzmin of targets whose relative speed is zero exists (Step S208), or in other words, whether a target whose relative speed is zero exists in the opening/closing detection range of the door for opening/closing detection.

If the minimum distance dzmin of targets whose relative speed is zero exists (Step S208; Yes), the determination processing unit 23 determines whether the minimum distance dnmin of targets whose relative speed is a negative value is smaller than the minimum distance dzmin of targets whose relative speed is zero (Step S209). If the minimum distance dnmin of targets whose relative speed is a negative value is equal to or greater than the minimum distance dzmin of targets whose relative speed is zero (Step S209; No), the determination processing unit 23 stores a false value "0" in the storage unit 24 as the buffer value BufN of the door opening determination count N (BufN = 0) (Step S211).

If the minimum distance dzmin of targets whose relative speed is zero does not exist (Step S208; No) or, in other words, if a target whose relative speed is zero does not exist in the opening/closing detection range of the door for opening/closing detection, or if the minimum distance dzmin of targets whose relative speed is zero exists (Step S208; Yes) and also if the minimum distance dnmin of targets whose relative speed is a negative value is smaller than the minimum distance dzmin of targets whose relative speed is zero (Step S209; Yes), the determination processing unit 23 stores a true value "1" in the storage unit 24 as the buffer value BufN of the door opening determination count N (BufN = 1) (Step S210).

The determination processing unit 23 finds a value ΣBufN by summing the buffer values BufN of the door opening determination counts N stored in the storage unit 24, sets the value ΣBufN as a door opening determination value n1 (Step S212), and determines whether the door opening determination value n1 is equal to or greater than the door opening determination threshold n1th (Step S213). If the door opening determination value n1 is below the door opening determination threshold n1th (Step S213; No), the determination processing unit 23 returns to the door opening/closing determination processing shown in Fig. 5.

If the door opening determination value n1 is equal to or greater than the door opening determination threshold n1th (Step S213; Yes), the determination processing unit 23 determines that the in-swing door as the door for opening/closing detection is in the process of opening and sets the value of a door state flag State to "1" (Step S214).

In the present disclosure, the door state flag State represents the determination result of the door opening/closing determination processing for the door for opening/closing detection. Specifically, when the door state flag State is 1, it represents that the door opening determination processing (Step S200) has detected that the door for opening/closing detection is in the process of opening. Also, when the door state flag State is 0, it represents that the door closing determination processing (Step S300) to be described later has detected that the door for opening/closing detection is in the process of closing. The value of the door state flag State is stored in the storage unit 24.

The door state flag State = 1 is retained in the storage unit 24 from when the door opening determination processing detects that the door for opening/closing detection is in the process of opening (Step S200) to when the door closing determination processing detects that the door for opening/closing detection is in the process of closing (Step S300). Also, the door state flag State = 0 is retained in the storage unit 24 from when the door closing determination processing detects that the door for opening/closing detection is in the process of closing (Step S300) to when the door opening determination processing detects that the door for opening/closing detection is in the process of opening (Step S200).

Then, the determination processing unit 23 sets the door opening determination count N to 0, resets the buffer values Buf1, Buf2, ..., BufNp of the door opening determination counts 1, 2, ..., Np shown in Fig. 7 (to 0) (Step S215), and returns to the door opening/closing determination processing shown in Fig. 5.

In the door opening determination processing shown in Fig. 6, if the number of frames in the latest door opening determination frame count Np where a target whose relative speed is a positive value or zero does not exist in the opening/closing detection range at a closer position than a target whose relative speed is a negative value (the door opening determination value n1 = ΣBufN) reaches or exceeds the door opening determination threshold n1th, the in-swing door as the door for opening/closing detection is determined to be in the process of opening, and the door state flag State is set to "1" (Step S214). Thus, the in-swing door as the door for opening/closing detection can be determined to have opened when the ratio of a period of time corresponding to the number of frames where a target whose relative speed is a positive value or zero does not exist in the opening/closing detection range at a closer position than a target whose relative speed is a negative value (the door opening determination value n1 = ΣBufN) to a predetermined period of time corresponding to the latest door opening determination frame count Np (n1/Np) is equal to or greater than a predetermined value (n1th/Np).

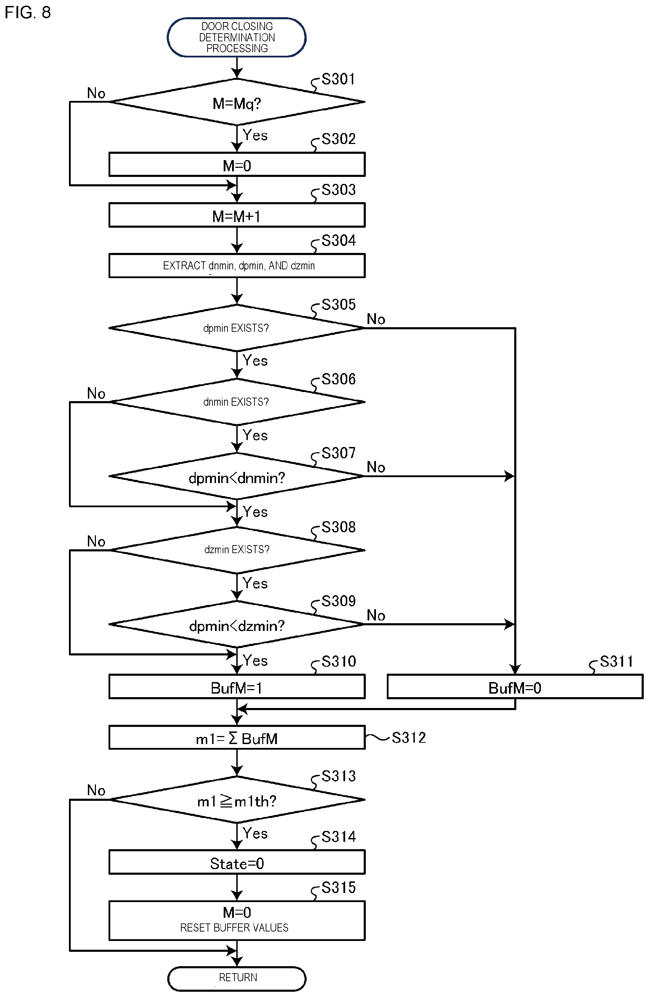

Next, the door closing determination processing (Step S300) is described with reference to Fig. 8. Fig. 8 is a sub-flowchart showing a first example of the door closing determination processing. The door closing determination processing shown in Fig. 8 is on the assumption that a door closing determination frame count Mq and a door closing determination threshold m1th (m1th ≤ Mq) are preset and stored in the storage unit 24.

The determination processing unit 23 determines whether a door closing determination count M equals the door closing determination frame count Mq (Step S301), and if M does not equal Mq (Step S301; No), sets M to M + 1 (Step S303). If M equals Mq (Step S301; Yes), the determination processing unit 23 sets M to 0 (Step S302) and sets M to M + 1 (Step S303).

The determination processing unit 23 refers to the relative distance, relative speed, and relative angle of each target stored in the storage unit 24 and extracts the minimum distance dnmin of targets whose relative speed is a negative value, the minimum distance dpmin of targets whose relative speed is a positive value, and the minimum distance dzmin of targets whose relative speed is zero within the preset opening/closing detection range of the door for opening/closing detection (Step S304).

The determination processing unit 23 first determines whether the minimum distance dpmin of targets whose relative speed is a positive value exists (Step S305), or in other words, whether a target whose relative speed is a positive value exists in the opening/closing detection range of the door for opening/closing detection.

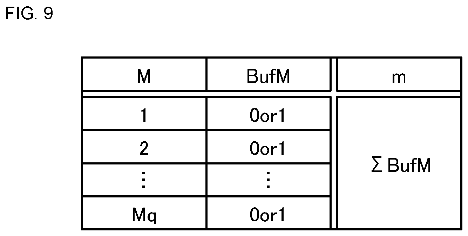

If the minimum distance dpmin of targets whose relative speed is a positive value does not exist (Step S305; No), or in other words, if a target whose relative speed is a positive value does not exist in the opening/closing detection range of the door for opening/closing detection, the determination processing unit 23 stores a false value "0" in the storage unit 24 as a buffer value BufM of the door closing determination count M (BufM = 0) (Step S311). Fig. 9 is a conceptual diagram showing example buffer values of door closing determination counts stored in the storage unit.

If the minimum distance dpmin of targets whose relative speed is a positive value exists (Step S305; Yes), the determination processing unit 23 next determines whether the minimum distance dnmin of targets whose relative speed is a negative value exists (Step S306), or in other words, whether a target whose relative speed is a negative value exists in the opening/closing detection range of the door for opening/closing detection.

If the minimum distance dnmin of targets whose relative speed is a negative value exists (Step S306; Yes), the determination processing unit 23 determines whether the minimum distance dpmin of targets whose relative speed is a positive value is smaller than the minimum distance dnmin of targets whose relative speed is a negative value (Step S307). If the minimum distance dpmin of targets whose relative speed is a positive value is equal to or greater than the minimum distance dnmin of targets whose relative speed is a negative value (Step S307; No), the determination processing unit 23 stores a false value "0" in the storage unit 24 as the buffer value BufM of the door closing determination count M (BufM = 0) (Step S311).

If the minimum distance dnmin of targets whose relative speed is a negative value does not exist (Step S306; No) or, in other words, if a target whose relative speed is a negative value does not exist in the opening/closing detection range of the door for opening/closing detection, or if the minimum distance dnmin of targets whose relative speed is a negative value exists (Step S306; Yes) and also if the minimum distance dpmin of targets whose relative speed is a positive value is smaller than the minimum distance dnmin of targets whose relative speed is a negative value (Step S307; Yes), the determination processing unit 23 next determines whether the minimum distance dzmin of targets whose relative speed is zero exists (Step S308), or in other words, whether a target whose relative speed is zero exists in the opening/closing detection range of the door for opening/closing detection.

If the minimum distance dzmin of targets whose relative speed is zero exists (Step S308; Yes), the determination processing unit 23 determines whether the minimum distance dpmin of targets whose relative speed is a positive value is smaller than the minimum distance dzmin of targets whose relative speed is zero (Step S309). If the minimum distance dpmin of targets whose relative speed is a positive value is equal to or greater than the minimum distance dzmin of targets whose relative speed is zero (Step S309; No), the determination processing unit 23 stores a false value "0" in the storage unit 24 as the buffer value BufM of the door closing determination count M (BufM = 0) (Step S311).

If the minimum distance dzmin of targets whose relative speed is zero does not exist (Step S308; No) or, in other words, if a target whose relative speed is zero does not exist in the opening/closing detection range of the door for opening/closing detection, or if the minimum distance dzmin of targets whose relative speed is zero exists (Step S308; Yes) and also if the minimum distance dpmin of targets whose relative speed is a positive value is smaller than the minimum distance dzmin of targets whose relative speed is zero (Step S309; Yes), the determination processing unit 23 stores a true value "1" in the storage unit 24 as the buffer value BufM of the door closing determination count M (BufM = 1) (Step S310).

The determination processing unit 23 finds a value ΣBufM by summing the buffer values BufM of the door closing determination counts M stored in the storage unit 24, sets the value ΣBufM as a door closing determination value m1 (Step S312), and determines whether the door closing determination value m1 is equal to or greater than the door closing determination threshold m1th (Step S313). If the door closing determination value m1 is below the door closing determination threshold m1th (Step S313; No), the determination processing unit 23 returns to the door opening/closing determination processing shown in Fig. 5.

If the door closing determination value m1 is equal to or greater than the door closing determination threshold m1th (Step S313; Yes), the determination processing unit 23 determines that the in-swing door as the door for opening/closing detection is in the process of closing and sets the value of the door state flag State to "0" (Step S314).

Then, the determination processing unit 23 sets the door closing determination count M to 0, resets the buffer values Buf1, Buf2, ..., BufMq of the door closing determination counts 1, 2, ..., Mq shown in Fig. 9 (to 0) (Step S315), and returns to the door opening/closing determination processing shown in Fig. 5.

In the door closing determination processing shown in Fig. 8, when the number of frames in the latest door closing determination frame count Mq where a target whose relative speed is a negative value or zero does not exist in the opening/closing detection range at a closer position than a target whose relative speed is a positive value (the door closing determination value m1 = ΣBufM) reaches or exceeds the door closing determination threshold m1th, the in-swing door as the door for opening/closing detection is determined to be in the process of closing, and the door state flag State is set to "0" (Step S314). Thus, the in-swing door as the door for opening/closing detection can be determined to have closed when the ratio of a period of time corresponding to the number of frames where a target whose relative speed is a negative value or zero does not exist in the opening/closing detection range at a closer position than a target whose relative speed is a positive value (the door closing determination value m1 = ΣBufM) to a predetermined period of time corresponding to the latest door closing determination frame count Mq (m1/Mq) is equal to or greater than a predetermined value (m1th/Mq).

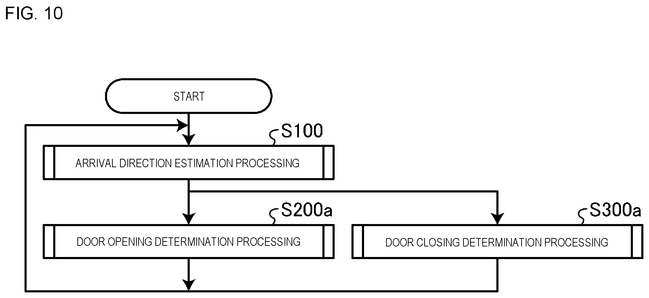

Fig. 10 is a flowchart showing a second example of the door opening/closing determination processing. The second example of the door opening/closing determination processing shown in Fig. 10 differs from the first example of the door opening/closing determination processing shown in Fig. 5 in the determination conditions used for the door opening determination and the door closing determination.

In the second example of the door opening/closing determination processing shown in Fig. 10, the door opening/closing detection apparatus 100 according to Embodiment 1 executes the arrival direction estimation processing (see Fig. 2) (Step S100), as it does in the first example of the door opening/closing determination processing described above, to obtain the relative distance, relative speed, and relative angle of each target, and after that executes door opening determination processing (Step S200a) and door closing determination processing (Step S300a) in parallel. The door opening/closing determination processing shown in Fig. 10 is executed at a predetermined frame period at which the radar 1 obtains an IF signal.

In Embodiment 1, the arrival direction estimation processing (Step S100) is, as described earlier, processing executed by the arrival direction estimation unit 21 of the processor 2. The arrival direction estimation unit 21 stores the obtained relative distance, relative speed, and relative angle of each target in the storage unit 24.

Also, in the second example of the door opening/closing determination processing shown in Fig. 10, the door opening determination processing (Step S200a) and the door closing determination processing (Step S300a) are processing executed by the determination processing unit 23 of the processor 2.

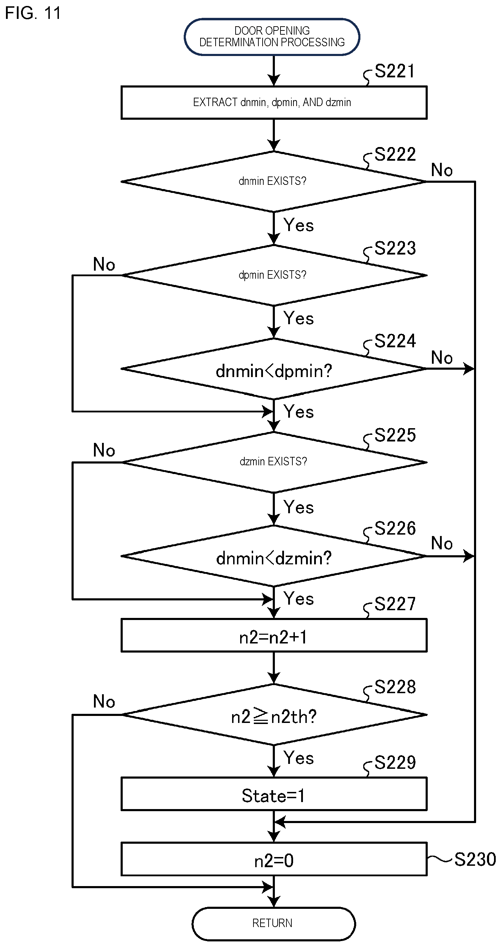

First, the door opening determination processing (Step S200a) is described with reference to Fig. 11. Fig. 11 is a sub-flowchart showing a second example of the door opening determination processing. The door opening determination processing shown in Fig. 11 is on the assumption that a door opening determination threshold n2th is preset and stored in the storage unit 24.

The determination processing unit 23 refers to the relative distance, relative speed, and relative angle of each target stored in the storage unit 24 and extracts the minimum distance dnmin of targets whose relative speed is a negative value, the minimum distance dpmin of targets whose relative speed is a positive value, and the minimum distance dzmin of targets whose relative speed is zero within the preset opening/closing detection range of the door for opening/closing detection (Step S221).

The determination processing unit 23 first determines whether the minimum distance dnmin of targets whose relative speed is a negative value exists (Step S222), or in other words, whether a target whose relative speed is a negative value exists in the opening/closing detection range of the door for opening/closing detection.

If the minimum distance dnmin of targets whose relative speed is a negative value does not exist (Step S222; No), or in other words, if a target whose relative speed is a negative value does not exist in the opening/closing detection range of the door for opening/closing detection, the determination processing unit 23 resets a door opening determination value n2 (to 0) (Step S230) and returns to the door opening/closing determination processing shown in Fig. 10.

If the minimum distance dnmin of targets whose relative speed is a negative value exists (Step S222; Yes), the determination processing unit 23 next determines whether the minimum distance dpmin of targets whose relative speed is a positive value exists (Step S223), or in other words, whether a target whose relative speed is a positive value exists in the opening/closing detection range of the door for opening/closing detection.

If the minimum distance dpmin of targets whose relative speed is a positive value exists (Step S223; Yes), the determination processing unit 23 determines whether the minimum distance dnmin of targets whose relative speed is a negative value is smaller than the minimum distance dpmin of targets whose relative speed is a positive value (Step S224). If the minimum distance dnmin of targets whose relative speed is a negative value is equal to or greater than the minimum distance dpmin of targets whose relative speed is a positive value (Step S224; No), the determination processing unit 23 resets the door opening determination value n2 (to 0) (Step S230) and returns to the door opening/closing determination processing shown in Fig. 10.

If the minimum distance dpmin of targets whose relative speed is a positive value does not exist (Step S223; No) or, in other words, if a target whose relative speed is a positive value does not exist in the opening/closing detection range of the door for opening/closing detection, or if the minimum distance dpmin of targets whose relative speed is a positive value exists (Step S223; Yes) and also if the minimum distance dnmin of targets whose relative speed is a negative value is smaller than the minimum distance dpmin of targets whose relative speed is a positive value (Step S224; Yes), the determination processing unit 23 next determines whether the minimum distance dzmin of targets whose relative speed is zero exists (Step S225), or in other words, whether a target whose relative speed is zero exists in the opening/closing detection range of the door for opening/closing detection.

If the minimum distance dzmin of targets whose relative speed is zero exists (Step S225; Yes), the determination processing unit 23 determines whether the minimum distance dnmin of targets whose relative speed is a negative value is smaller than the minimum distance dzmin of targets whose relative speed is zero (Step S226). If the minimum distance dnmin of targets whose relative speed is a negative value is equal to or greater than the minimum distance dzmin of targets whose relative speed is zero (Step S226; No), the determination processing unit 23 resets the door opening determination value n2 (to 0) (Step S230) and returns to the door opening/closing determination processing shown in Fig. 10.

If the minimum distance dzmin of targets whose relative speed is zero does not exist (Step S225; No) or, in other words, if a target whose relative speed is zero does not exist in the opening/closing detection range of the door for opening/closing detection, or if the minimum distance dzmin of targets whose relative speed is zero exists (Step S225; Yes) and if the minimum distance dnmin of targets whose relative speed is a negative value is smaller than the minimum distance dzmin of targets whose relative speed is zero (Step S226; Yes), the determination processing unit 23 sets the door opening determination value n2 to n2 + 1 (Step S227) and determines whether the door opening determination value n2 is equal to or greater than the door opening determination threshold n2th (Step S228). If the door opening determination value n2 is below the door opening determination threshold n2th (Step S228; No), the determination processing unit 23 returns to the door opening/closing determination processing shown in Fig. 10.

If the door opening determination value n2 is equal to or greater than the door opening determination threshold n2th (Step S228; Yes), the determination processing unit 23 determines that the in-swing door as the door for opening/closing detection is in the process of opening and sets the value of the door state flag State to "1" (Step S229).

Then, the determination processing unit 23 resets the door opening determination value n2 (to 0) (Step S230) and returns to the door opening/closing determination processing shown in Fig. 10.

In the door opening determination processing shown in Fig. 11, if a frame where a target whose relative speed is a positive value or zero does not exist continuously in the opening/closing detection range at a closer position than a target whose relative speed is a negative value (the door opening determination value n2) occurs consecutively for a predetermined number (the door opening determination threshold n2th) or more of times, the in-swing door as the door for opening/closing detection is determined to be in the process of opening, and the value of the door state flag State is set to "1" (Step S229). Thus, the in-swing door as the door for opening/closing detection can be determined to have opened if the period of time during which a frame where a target whose relative speed is a positive value or zero does not exist in the opening/closing detection range at a closer position than a target whose relative speed is a negative value occurs consecutively for a predetermined number or more of times is a predetermined period of time or longer.

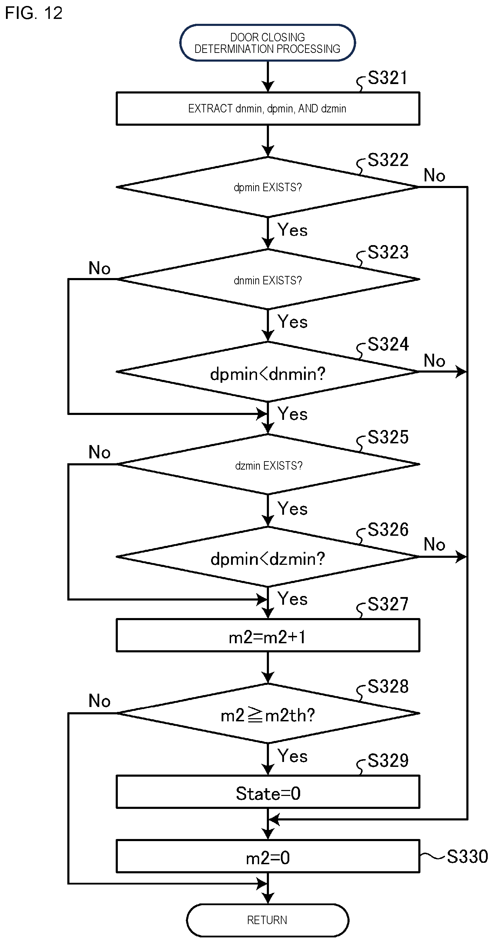

Next, the door closing determination processing (Step S300a) is described with reference to Fig. 12. Fig. 12 is a sub-flowchart showing a second example of the door closing determination processing. The door closing determination processing shown in Fig. 12 is on the assumption that a door closing determination threshold m2th is preset and stored in the storage unit 24.

The determination processing unit 23 refers to the relative distance, relative speed, and relative angle of each target stored in the storage unit 24 and extracts the minimum distance dnmin of targets whose relative speed is a negative value, the minimum distance dpmin of targets whose relative speed is a positive value, and the minimum distance dzmin of targets whose relative speed is zero within the preset opening/closing detection range of the door for opening/closing detection (Step S321).

The determination processing unit 23 first determines whether the minimum distance dpmin of targets whose relative speed is a positive value exists (Step S322), or in other words, whether a target whose relative speed is a positive value exists in the opening/closing detection range of the door for opening/closing detection.

If the minimum distance dpmin of targets whose relative speed is a positive value does not exist (Step S322; No), or in other words, if a target whose relative speed is a positive value does not exist in the opening/closing detection range of the door for opening/closing detection, the determination processing unit 23 resets a door closing determination value m2 (to 0) (Step S330) and returns to the door opening/closing determination processing shown in Fig. 10.

If the minimum distance dpmin of targets whose relative speed is a positive value exists (Step S322; Yes), the determination processing unit 23 next determines whether the minimum distance dnmin of targets whose relative speed is a negative value exists (Step S323), or in other words, whether a target whose relative speed is a negative value exists in the opening/closing detection range of the door for opening/closing detection.

If the minimum distance dnmin of targets whose relative speed is a negative value exists (Step S323; Yes), the determination processing unit 23 determines whether the minimum distance dpmin of targets whose relative speed is a positive value is smaller than the minimum distance dnmin of targets whose relative speed is a negative value (Step S324). If the minimum distance dpmin of targets whose relative speed is a positive value is equal to or greater than the minimum distance dnmin of targets whose relative speed is a negative value (Step S324; No), the determination processing unit 23 resets the door closing determination value m2 (to 0) (Step S330) and returns to the door opening/closing determination processing shown in Fig. 10.

If the minimum distance dnmin of targets whose relative speed is a negative value does not exist (Step S323; No) or, in other words, if a target whose relative speed is a negative value does not exist in the opening/closing detection range of the door for opening/closing detection, or if the minimum distance dnmin of targets whose relative speed is a negative value exists (Step S323; Yes) and also if the minimum distance dpmin of targets whose relative speed is a positive value is smaller than the minimum distance dnmin of targets whose relative speed is a negative value (Step S324; Yes), the determination processing unit 23 next determines whether the minimum distance dzmin of targets whose relative speed is zero exists (Step S325), or in other words, whether a target whose relative speed is zero exists in the opening/closing detection range of the door for opening/closing detection.

If the minimum distance dzmin of targets whose relative speed is zero exists (Step S325; Yes), the determination processing unit 23 determines whether the minimum distance dpmin of targets whose relative speed is a positive value is smaller than the minimum distance dzmin of targets whose relative speed is zero (Step S326). If the minimum distance dpmin of targets whose relative speed is a positive value is equal to or greater than the minimum distance dzmin of targets whose relative speed is zero (Step S326; No), the determination processing unit 23 resets the door closing determination value m2 (to 0) (Step S330) and returns to the door opening/closing determination processing shown in Fig. 10.

If the minimum distance dzmin of targets whose relative speed is zero does not exist (Step S325; No) or, in other words, if a target whose relative speed is zero does not exist in the opening/closing detection range of the door for opening/closing detection, or if the minimum distance dzmin of targets whose relative speed is zero exists (Step S325; Yes) and also if the minimum distance dpmin of targets whose relative speed is a positive value is smaller than the minimum distance dzmin of targets whose relative speed is zero (Step S326; Yes), the determination processing unit 23 sets the door closing determination value m2 to m2 + 1 (Step S327) and determines whether the door closing determination value m2 is equal to or greater than the door closing determination threshold m2th (Step S328). If the door closing determination value m2 is below the door closing determination threshold m2th (Step S328; No), the determination processing unit 23 returns to the door opening/closing determination processing shown in Fig. 10.

If the door closing determination value m2 is equal to or greater than the door closing determination threshold m2th (Step S328; Yes), the determination processing unit 23 determines that the in-swing door as the door for opening/closing detection is in the process of closing and sets the value of the door state flag State to "0" (Step S329).

Then, the determination processing unit 23 resets the door closing determination value m2 (to 0) (Step S330) and returns to the door opening/closing determination processing shown in Fig. 10.

In the door closing determination processing shown in Fig. 12, if a frame where a target whose relative speed is a negative value or zero does not exist continuously in the opening/closing detection range at a closer position than a target whose relative speed is a positive value (the door closing determination value m2) occurs consecutively for a predetermined number (the door closing determination threshold m2th) or more of times, the in-swing door as the door for opening/closing detection is determined to be in the process of closing, and the value of the door state flag State is set to "0" (Step S329). Thus, the in-swing door as the door for opening/closing detection can be determined to have closed when the period of time during which a frame where a target whose relative speed is a negative value or zero does not exist in the opening/closing detection range at a closer position than a target whose relative speed is a positive value occurs consecutively for a predetermined number or more of times is a predetermined period of time or longer.

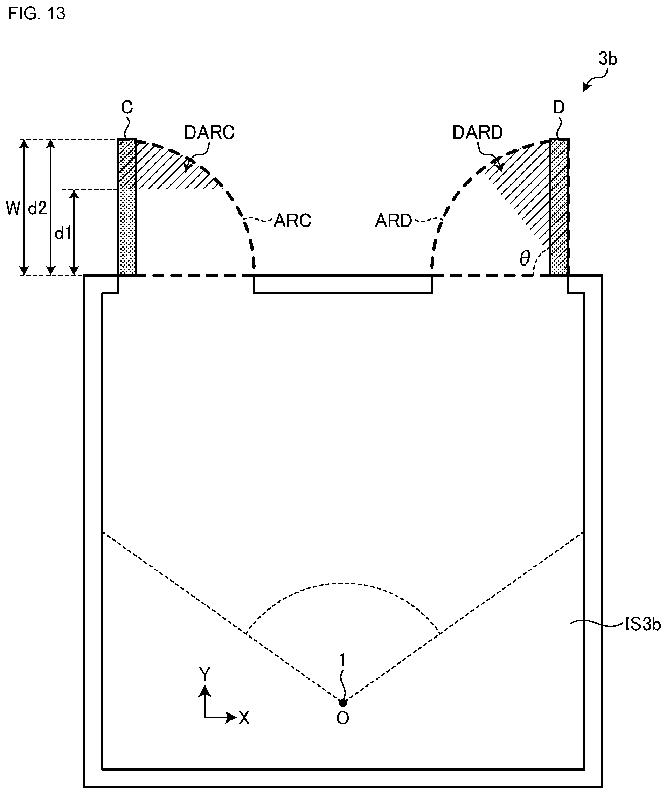

Fig. 13 is a diagram showing a second specific example of an opening/closing detection target of the door opening/closing detection apparatus according to Embodiment 1. As an example, Fig. 13 shows a room 3b with two doors C and D provided within the detection range of the radar 1, the origin O of which is the installation position of the radar 1. In the second specific example shown in Fig. 13, the doors C and D provided to the room 3b are out-swing doors that open outward relative to an indoor space IS3b.

In Fig. 13, the X-direction represents the direction in which the plurality of transmission antennas and reception antennas of the radar 1 are arrayed, and the Y-direction represents a direction perpendicular to the direction in which the plurality of transmission antennas and reception antennas of the radar 1 are arrayed.

In the present disclosure, as described earlier, the radar 1 is an FMCW radar or an FCM radar and can obtain positional information (distance information, speed information, and angle information) on each target. Thus, a plurality of doors can be set as opening/closing detection targets, as shown in Fig. 13. Specifically, in the example shown in Fig. 13, the doors C and D can be set as opening/closing detection targets.

As shown in Fig. 13, in a case where the doors C and D provided to the room 3b are out-swing doors that open outward relative to the indoor space IS3b, when the door C or D is moving in the opening direction, the target corresponding to the door C or D moves in a direction away from the radar 1, and when the door C or D is moving in the closing direction, the target corresponding to the door C or D moves in a direction approaching the radar 1.

When the target is approaching the radar 1, the relative speed of the target is a negative value. When the target is moving away from the radar 1, the relative speed of the target is a positive value. When the target is still, the relative speed of the target is zero.

In the example shown in Fig. 13, the storage unit 24 has stored therein the opening/closing detection range of each door for opening/closing detection and the correspondences between the moving direction and the speed of the door for opening/closing detection.

Specifically, for example, in the example shown in Fig. 13, the storage unit 24 has stored therein an opening/closing detection range ARC of the door C and the correspondences between the moving direction and the speed of the door C.

More specifically, the storage unit 24 has stored therein settings indicating that the relative speed of the target corresponding to the door C is a positive value when the door C is moving in the opening direction and is a negative value when the door C is moving in the closing direction.

Also, for example, in the example shown in Fig. 13, the storage unit 24 has stored therein an opening/closing detection range ARD of the door D and the correspondences between the moving direction and the speed of the door D.

More specifically, the storage unit 24 has stored therein settings indicating that the relative speed of the target corresponding to the door D is a positive value when the door D is moving in the opening direction and is a negative value when the door D is moving in the closing direction.

Note that the present disclosure is not limited to the example shown in Fig. 13 where, in a case where the doors for opening/closing detection (the doors C and D) are out-swing doors, the relative speed of a target corresponding to a door for opening/closing detection is a positive value when the door for opening/closing detection is moving in the opening direction and is a negative value when the door for opening/closing detection is moving in the closing direction.

Also, although the opening/closing detection ranges ARC and ARD of the doors C and D are depicted by broken lines in Fig. 13, the opening/closing detection ranges of the doors for opening/closing detection are not limited to the mode shown in Fig. 13. A mode may be employed where the motion range of each door for opening/closing detection is obtained in advance and is set as the opening/closing detection range of the door for opening/closing detection.

Also, in a case where the door for opening/closing detection is an out-swing door, a specified region narrower than the opening/closing detection range of the door for opening/closing detection is set inside the opening/closing detection range and stored in the storage unit 24 in addition to the opening/closing detection range of the door for opening/closing detection and correspondences between the moving direction and the speed of the door for opening/closing detection. The following describes the specified region provided in a case where the door for opening/closing detection is an out-swing door.

In a case where the door for opening/closing detection is an out-swing door, in the process of a person entering the room, i.e., when a person outside the room opens the out-swing door and enters the room, the relative speed of the door for opening/closing detection is expected to be zero after the door is pulled and opened from outside of the room.

Also, in a case where the door for opening/closing detection is an out-swing door, in the process of a person exiting the room, i.e., when a person exits the room from inside of the room, the relative speed of the door for opening/closing detection is expected to be zero after the door is pushed and opened from inside of the room.

Thus, in the door opening/closing determination processing by the door opening/closing detection apparatus 100 according to Embodiment 1, in a case where the door for opening/closing detection is an out-swing door, a specified region DARC or DARD narrower than the opening/closing detection range ARC or ARD is provided as shown in Fig. 13, and the door opening/closing detection apparatus 100 makes the opening/closing determination of the door for opening/closing detection when a target whose relative speed is zero is absent inside the specified region DARC or DARD.

In Fig. 13, for illustrative purposes, the specified region DARC provided in the opening/closing detection range ARC and the specified region DARD provided in the opening/closing detection range ARD are differently set.

Specifically, in the second specific example shown in Fig. 13, the specified region DARC in the opening/closing detection range ARC is set by restricting the opening/closing detection range ARC in the Y-direction. More specifically, the specified region DARD in the opening/closing detection range ARC is set by restricting the opening/closing detection range ARC in the Y-direction to a region of d1 or more and d2 or less (d1 ≤ d2 ≤ W, where W is the width of the door for opening/closing detection (the door C here)).

Also, in the second specific example shown in Fig. 13, the specified region DAR in the opening/closing detection range ARD is set by restricting the motion range of the door D in the opening/closing detection range ARD. More specifically, the specified region DAR in the opening/closing detection range ARD is a region of a predetermined door open angle θ or more (θ ≤ θth, where θth is the maximum open angle of the door for opening/closing detection (the door D here)).

The following describes a specific example of the door opening/closing determination processing performed in a case where the door for opening/closing detection is an out-swing door.

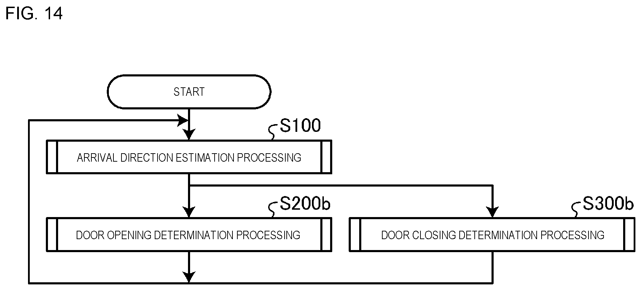

Fig. 14 is a flowchart showing a third example of the door opening/closing determination processing. Fig. 14 shows a specific example of the door opening/closing determination processing performed in a case where the door for opening/closing detection is an out-swing door. Note that, for ease of description, the following describes processing performed in a case where there is a single door for opening/closing detection.

In the third example of the door opening/closing determination processing shown in Fig. 14, the door opening/closing detection apparatus 100 according to Embodiment 1 executes the arrival direction estimation processing (see Fig. 2) (Step S100) to obtain the relative distance, relative speed, and relative angle of each target, and after that, executes door opening determination processing for detecting the process of the out-swing door opening (Step S200b) and door closing determination processing for detecting the process of the out-swing door closing (Step S300b) in parallel. The door opening/closing determination processing shown in Fig. 14 is executed at a predetermined frame period at which the radar 1 obtains an IF signal.

In Embodiment 1, as described earlier, the arrival direction estimation processing (Step S100) is processing executed by the arrival direction estimation unit 21 of the processor 2. The arrival direction estimation unit 21 stores the obtained relative distance, relative speed, and relative angle of each target in the storage unit 24.

Also, in the third example of the door opening/closing determination processing shown in Fig. 14, the door opening determination processing (Step S200b) and the door closing determination processing (Step S300b) are processing executed by the determination processing unit 23 of the processor 2.

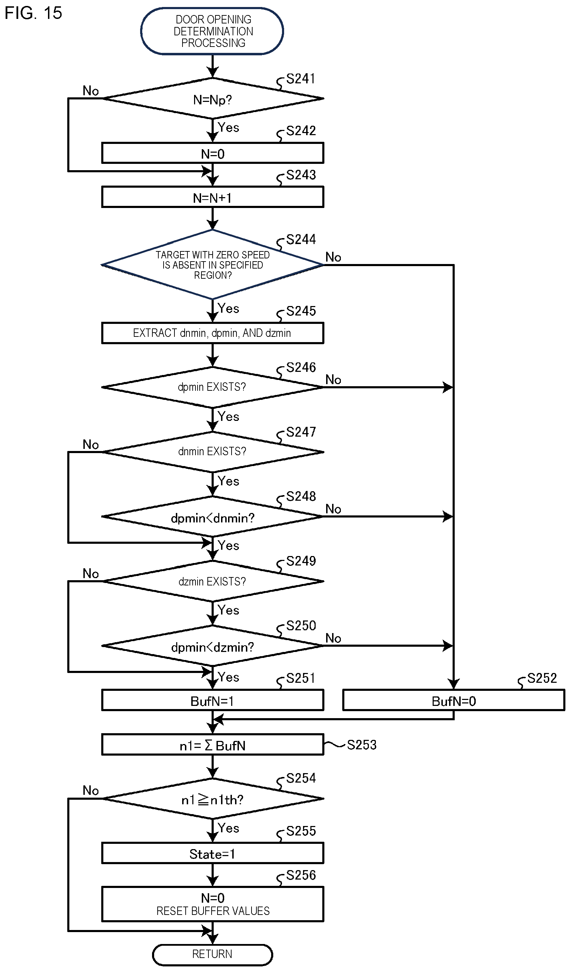

First, the door opening determination processing (Step S200b) is described with reference to Fig. 15. Fig. 15 is a sub-flowchart showing a third example of the door opening determination processing. The door opening determination processing shown in Fig. 15 is on the assumption that a door opening determination frame count Np and a door opening determination threshold nth (nth ≤ Np) are preset and stored in the storage unit 24.

The determination processing unit 23 determines whether the door opening determination count N equals the door opening determination frame count Np (Step S241). If N does not equal Np (Step S241; No), the determination processing unit 23 sets N to N + 1 (Step S243). If N equals Np (Step S241; Yes), the determination processing unit 23 sets N to 0 (Step S242) and then sets N to N + 1 (Step S243).

The determination processing unit 23 refers to the relative distance, relative speed, and relative angle of each target stored in the storage unit 24 to determine whether a target whose relative speed is zero is absent in the specified region in the preset opening/closing detection range of the door for opening/closing detection (Step S244). If a target whose relative speed is zero is present in the specified region in the opening/closing detection range of the door for opening/closing detection (Step S244; No), the determination processing unit 23 stores a false value "0" in the storage unit 24 as the buffer value BufN of the door opening determination count N (BufN = 0) (Step S252).

If a target whose relative speed is zero is absent in the specified region in the opening/closing detection range of the door for opening/closing detection (Step S244; Yes), the determination processing unit 23 extracts the minimum distance dnmin of targets whose relative speed is a negative value, the minimum distance dpmin of targets whose relative speed is a positive value, and the minimum distance dzmin of targets whose relative speed is zero within the preset opening/closing detection range of the door for opening/closing detection (Step S245).

The determination processing unit 23 determines whether the minimum distance dpmin of targets whose relative speed is a positive value exists (Step S246), or in other words, whether a target whose relative speed is a positive value exists in the opening/closing detection range of the door for opening/closing detection.

If the minimum distance dpmin of targets whose relative speed is a positive value does not exist (Step S246; No), or in other words, if a target whose relative speed is a positive value does not exist in the opening/closing detection range of the door for opening/closing detection, the determination processing unit 23 stores a false value "0" in the storage unit 24 as the buffer value BufN of the door opening determination count N (BufN = 0) (Step S252).

If the minimum distance dpmin of targets whose relative speed is a positive value exists (Step S246; Yes), the determination processing unit 23 next determines whether the minimum distance dnmin of targets whose relative speed is a negative value exists (Step S247), or in other words, whether a target whose relative speed is a negative value exists in the opening/closing detection range of the door for opening/closing detection.

If the minimum distance dnmin of targets whose relative speed is a negative value exists (Step S247; Yes), the determination processing unit 23 determines whether the minimum distance dpmin of targets whose relative speed is a positive value is smaller than the minimum distance dnmin of targets whose relative speed is a negative value (Step S248). If the minimum distance dpmin of targets whose relative speed is a positive value is equal to or greater than the minimum distance dnmin of targets whose relative speed is a negative value (Step S248; No), the determination processing unit 23 stores a false value "0" in the storage unit 24 as the buffer value BufN of the door opening determination count N (BufN = 0) (Step S252).

If the minimum distance dnmin of targets whose relative speed is a negative value does not exist (Step S247; No) or, in other words, if a target whose relative speed is a negative value does not exist in the opening/closing detection range of the door for opening/closing detection, or if the minimum distance dnmin of targets whose relative speed is a negative value exists (Step S247; Yes) and also if the minimum distance dpmin of targets whose relative speed is a positive value is smaller than the minimum distance dnmin of targets whose relative speed is a negative value (Step S248; Yes), the determination processing unit 23 next determines whether the minimum distance dzmin of targets whose relative speed is zero exists (Step S249), or in other words, whether a target whose relative speed is zero exists in the opening/closing detection range of the door for opening/closing detection.

If the minimum distance dzmin of targets whose relative speed is zero exists (Step S249; Yes), the determination processing unit 23 determines whether the minimum distance dpmin of targets whose relative speed is a positive value is smaller than the minimum distance dzmin of targets whose relative speed is zero (Step S250). If the minimum distance dpmin of targets whose relative speed is a positive value is equal to or greater than the minimum distance dzmin of targets whose relative speed is zero (Step S250; No), the determination processing unit 23 stores a false value "0" in the storage unit 24 as the buffer value BufN of the door opening determination count N (BufN = 0) (Step S252).

If the minimum distance dzmin of targets whose relative speed is zero does not exist (Step S249; No) or, in other words, if a target whose relative speed is zero does not exist in the opening/closing detection range of the door for opening/closing detection, or if the minimum distance dzmin of targets whose relative speed is zero exists (Step S249; Yes) and also if the minimum distance dpmin of targets whose relative speed is a positive value is smaller than the minimum distance dzmin of targets whose relative speed is zero (Step S250; Yes), the determination processing unit 23 stores a true value "1" in the storage unit 24 as the buffer value BufN of the door opening determination count N (BufN = 1) (Step S251).

The determination processing unit 23 finds a value ΣBufN by summing the buffer values BufN of the door opening determination counts N stored in the storage unit 24, sets the value ΣBufN as a door opening determination value n1 (Step S253), and determines whether the door opening determination value n1 is equal to or greater than the door opening determination threshold nth (Step S254). If the door opening determination value n1 is below the door opening determination threshold nth (Step S254; No), the determination processing unit 23 returns to the door opening/closing determination processing shown in Fig. 14.

If the door opening determination value n1 is equal to or greater than the door opening determination threshold nth (Step S254; Yes), the determination processing unit 23 determines that the out-swing door as the door for opening/closing detection is in the process of opening and sets the value of the door state flag State to "1" (Step S255).

Then, the determination processing unit 23 sets the door opening determination count N to 0, resets the buffer values Buf1, Buf2, ..., BufNp of the door opening determination counts 1, 2, ..., Np shown in Fig. 7 (to 0) (Step S256), and returns to the door opening/closing determination processing shown in Fig. 14.

In the door opening determination processing shown in Fig. 15, if the number of frames in the latest door opening determination frame count Np where a target whose relative speed is zero does not exist in the specified region of the opening/closing detection range and also a target whose relative speed is a negative value or zero does not exist in the opening/closing detection range at a closer position than a target whose relative speed is a positive value (the door opening determination value n1 = ΣBufN) reaches or exceeds the door opening determination threshold nth, the out-swing door as the door for opening/closing detection is determined to be in the process of opening, and the door state flag State is set to "1" (Step S255). Thus, the out-swing door as the door for opening/closing detection can be determined to have opened if the ratio of a period of time corresponding to the number of frames where a target whose relative speed is zero does not exist in the specified region of the opening/closing detection range and a target whose relative speed is a negative value or zero does not exist in the opening/closing detection range at a closer position than a target whose relative speed is a positive value (the door opening determination value n1 = ΣBufN) to a predetermined period of time corresponding to the latest door opening determination frame count Np (n1/Np) is equal to or greater than a predetermined value (nth/Np).

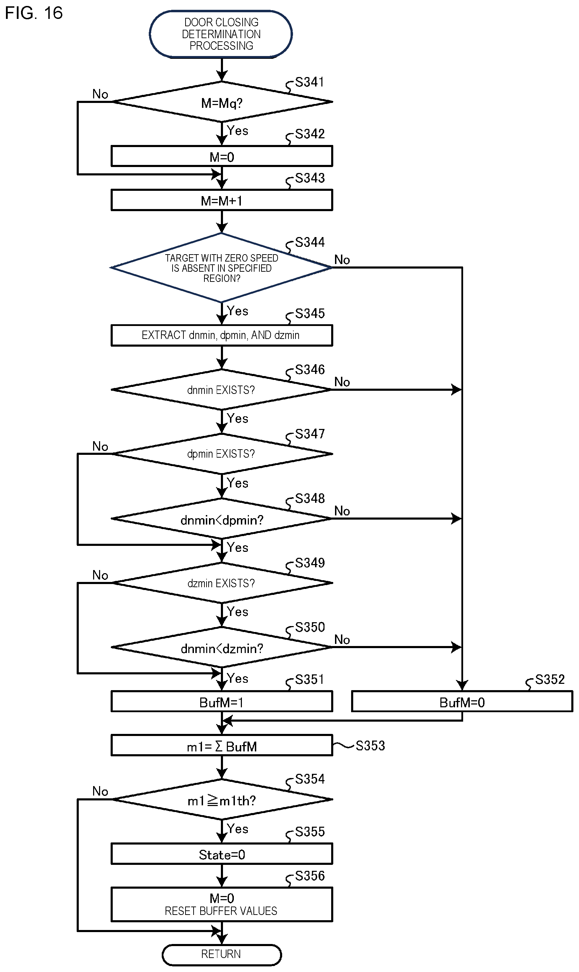

Next, the door closing determination processing (Step S300b) is described with reference to Fig. 16. Fig. 16 is a sub-flowchart showing a third example of the door closing determination processing. The door closing determination processing shown in Fig. 16 is on the assumption that a door closing determination frame count Mq and a door closing determination threshold mth (mth ≤ Mq) are preset and stored in the storage unit 24.

The determination processing unit 23 determines whether the door closing determination count M equals the door closing determination frame count Mq (Step S341). If M does not equal Mq (Step S341; No), the determination processing unit 23 sets M to M + 1 (Step S343). If M equals Mq (Step S341; Yes), the determination processing unit 23 sets M to 0 (Step S342) and sets M to M + 1 (Step S343).

The determination processing unit 23 refers to the relative distance, relative speed, and relative angle of each target stored in the storage unit 24 to determine whether a target whose relative speed is zero is absent in the preset opening/closing detection range of the door for opening/closing detection (Step S344). If a target whose relative speed is zero is present in the specified region in the opening/closing detection range of the door for opening/closing detection (Step S344; No), the determination processing unit 23 stores a false value "0" in the storage unit 24 as the buffer value BufM of the door closing determination count M (BufM = 0) (Step S352).

If a target whose relative speed is zero is absent in the specified region in the opening/closing detection range of the door for opening/closing detection (Step S344; Yes), the determination processing unit 23 extracts the minimum distance dnmin of targets whose relative speed is a negative value, the minimum distance dpmin of targets whose relative speed is a positive value, and the minimum distance dzmin of targets whose relative speed is zero within the preset opening/closing detection range of the door for opening/closing detection (Step S345).

The determination processing unit 23 determines whether the minimum distance dnmin of targets whose relative speed is a negative value exists (Step S346), or in other words, whether a target whose relative speed is a negative value exists in the opening/closing detection range of the door for opening/closing detection.

If the minimum distance dnmin of targets whose relative speed is a negative value does not exist (Step S346; No) or, in other words, if a target whose relative speed is a negative value does not exist in the opening/closing detection range of the door for opening/closing detection, the determination processing unit 23 stores a false value "0" in the storage unit 24 as the buffer value BufM of the door closing determination count M (BufM = 0) (Step S352).

If the minimum distance dnmin of targets whose relative speed is a negative value exists (Step S346; Yes), the determination processing unit 23 next determines whether the minimum distance dpmin of targets whose relative speed is a positive value exists (Step S347), or in other words, whether a target whose relative speed is a positive value exists in the opening/closing detection range of the door for opening/closing detection.

If the minimum distance dpmin of targets whose relative speed is a positive value exists (Step S347; Yes), the determination processing unit 23 determines whether the minimum distance dnmin of targets whose relative speed is a negative value is smaller than the minimum distance dpmin of targets whose relative speed is a positive value (Step S348). If the minimum distance dnmin of targets whose relative speed is a negative value is equal to or greater than the minimum distance dpmin of targets whose relative speed is a positive value (Step S348; No), the determination processing unit 23 stores a false value "0" in the storage unit 24 as the buffer value BufM of the door closing determination count M (BufM = 0) (Step S352).

If the minimum distance dpmin of targets whose relative speed is a positive value does not exist (Step S347; No) or, in other words, if a target whose relative speed is a positive value does not exist in the opening/closing detection range of the door for opening/closing detection, or if the minimum distance dpmin of targets whose relative speed is a positive value exists (Step S347; Yes) and also if the minimum distance dnmin of targets whose relative speed is a negative value is smaller than the minimum distance dpmin of targets whose relative speed is a positive value (Step S348; Yes), the determination processing unit 23 next determines whether the minimum distance dzmin of targets whose relative speed is zero exists (Step S349), or in other words, whether a target whose relative speed is zero exists in the opening/closing detection range of the door for opening/closing detection.

If the minimum distance dzmin of targets whose relative speed is zero exists (Step S349; Yes), the determination processing unit 23 determines whether the minimum distance dnmin of targets whose relative speed is a negative value is smaller than the minimum distance dzmin of targets whose relative speed is zero (Step S350). If the determination processing unit 23 determines that the minimum distance dnmin of targets whose relative speed is a negative value is equal to or greater than the minimum distance dzmin of targets whose relative speed is zero (Step S350; No), the determination processing unit 23 stores a false value "0" in the storage unit 24 as the buffer value BufN of the door opening determination count N (BufN = 0) (Step S352).

If the minimum distance dzmin of targets whose relative speed is zero does not exist (Step S349; No) or, in other words, if a target whose relative speed is zero does not exist in the opening/closing detection range of the door for opening/closing detection, or if the minimum distance dzmin of targets whose relative speed is zero exists (Step S349; Yes) and also if the minimum distance dnmin of targets whose relative speed is a negative value is smaller than the minimum distance dzmin of targets whose relative speed is zero (Step S350; Yes), the determination processing unit 23 stores a true value "1" in the storage unit 24 as the buffer value BufM of the door closing determination count M (BufM = 1) (Step S351).

The determination processing unit 23 finds a value ΣBufM by summing the buffer values BufM of the door closing determination counts M stored in the storage unit 24, sets the value ΣBufM as a door closing determination value m1 (Step S353), and determines whether the door closing determination value m1 is equal to or greater than the door closing determination threshold m1th (Step S354). If the door closing determination value m1 is below the door closing determination threshold m1th (Step S354; No), the determination processing unit 23 returns to the door opening/closing determination processing shown in Fig. 14.

If the door closing determination value m1 is equal to or greater than the door closing determination threshold m1th (Step S354; Yes), the determination processing unit 23 determines that the out-swing door as the door for opening/closing detection is in the process of closing and sets the value of the door state flag State to "0" (Step S355).

Then, the determination processing unit 23 sets the door closing determination count M to 0, resets the buffer values Buf1, Buf2, ..., BufMq of the door closing determination counts 1, 2, ..., Mq shown in Fig. 9 (to 0) (Step S356), and returns to the door opening/closing determination processing shown in Fig. 14.

In the door closing determination processing shown in Fig. 16, if the number of frames in the latest door closing determination frame count Mq where a target whose relative speed is zero does not exist in the specified region in the opening/closing detection range and also a target whose relative speed is a positive value or zero does not exist in the opening/closing detection range at a closer position than a target whose relative speed is a negative value (the door closing determination value m1 = ΣBufM) reaches or exceeds the door closing determination threshold m1th, the out-swing door as the door for opening/closing detection is determined to be in the process of closing, and the door state flag State is set to "0" (Step S355). Thus, the out-swing door as the door for opening/closing detection can be determined to have closed if the ratio of a period of time corresponding to the number of frames where a target whose relative speed is zero does not exist in the specified region in the opening/closing detection range and a target whose relative speed is a positive value or zero does not exist in the opening/closing detection range at a closer position than a target whose relative speed is a negative value (the door closing determination value m1 = ΣBufM) to a predetermined period of time corresponding to the latest door closing determination frame count Mq (m1/Mq) is equal to or greater than a predetermined value (m1th/Mq).

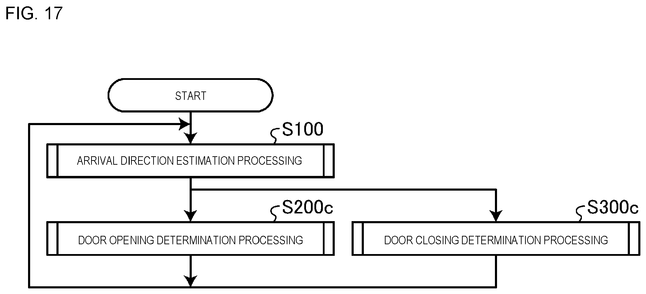

Fig. 17 is a flowchart showing a fourth example of the door opening/closing determination processing. The fourth example of the door opening/closing determination processing shown in Fig. 17 differs from the third example of the door opening/closing determination processing shown in Fig. 14 in the determination conditions used for the door opening determination and the door closing determination.

In the fourth example of the door opening/closing determination processing shown in Fig. 17, the door opening/closing detection apparatus 100 according to Embodiment 1 executes the arrival direction estimation processing (see Fig. 2) (Step S100), as it does in the third example of the door opening/closing determination processing described above, to obtain the relative distance, relative speed, and relative angle of each target and after that executes door opening determination processing (Step S200c) and door closing determination processing (Step S300c) in parallel. The door opening/closing determination processing shown in Fig. 14 is executed at a predetermined frame period at which the radar 1 obtains an IF signal.

In Embodiment 1, the arrival direction estimation processing (Step S100) is, as described earlier, processing executed by the arrival direction estimation unit 21 of the processor 2. The arrival direction estimation unit 21 stores the obtained relative distance, relative speed, and relative angle of each target in the storage unit 24.

Also, in the fourth example of the door opening/closing determination processing shown in Fig. 17, the door opening determination processing (Step S200c) and the door closing determination processing (Step S300c) are processing executed by the determination processing unit 23 of the processor 2.

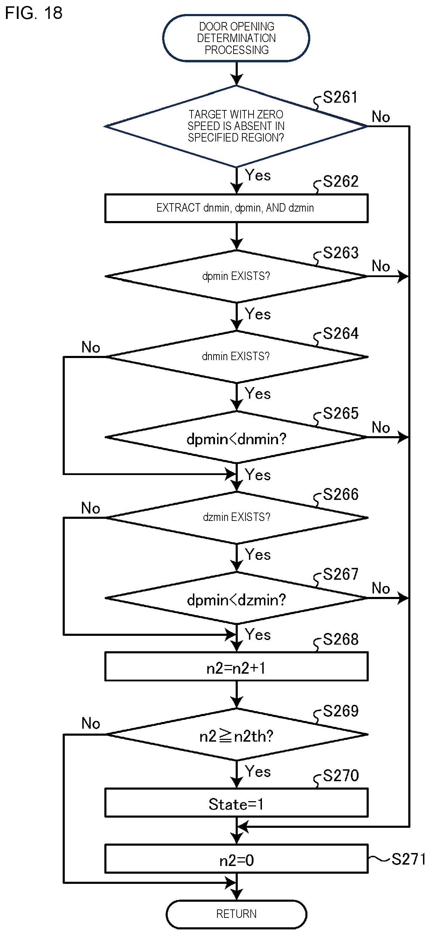

First, the door opening determination processing (Step S200c) is described with reference to Fig. 18. Fig. 18 is a sub-flowchart showing a fourth example of the door opening determination processing. The door opening determination processing shown in Fig. 18 is on the assumption that a door opening determination threshold n2th is preset and stored in the storage unit 24.

The determination processing unit 23 refers to the relative distance, relative speed, and relative angle of each target stored in the storage unit 24 to determine whether a target whose relative speed is zero is absent in the specified region in the preset opening/closing detection range of the door for opening/closing detection in the preset opening/closing detection range of the door for opening/closing detection (Step S261). If a target whose relative speed is zero is present in the specified region in the opening/closing detection range of the door for opening/closing detection (Step S261; No), the determination processing unit 23 resets the door opening determination value n2 (to 0) (Step S271) and returns to the door opening/closing determination processing shown in Fig. 17.

If a target whose relative speed is zero is absent in the specified region in the opening/closing detection range of the door for opening/closing detection (Step S261; Yes), the determination processing unit 23 extracts the minimum distance dnmin of targets whose relative speed is a negative value, the minimum distance dpmin of targets whose relative speed is a positive value, and the minimum distance dzmin of targets whose relative speed is zero within the preset opening/closing detection range of the door for opening/closing detection (Step S262).

The determination processing unit 23 determines whether the minimum distance dpmin of targets whose relative speed is a positive value exists (Step S263), or in other words, whether a target whose relative speed is a positive value exists in the opening/closing detection range of the door for opening/closing detection.

If the minimum distance dpmin of targets whose relative speed is a positive value does not exist (Step S263; No), or in other words, if a target whose relative speed is a positive value does not exist in the opening/closing detection range of the door for opening/closing detection, the determination processing unit 23 resets the door opening determination value n2 (to 0) (Step S271) and returns to the door opening/closing determination processing shown in Fig. 17.

If the minimum distance dpmin of targets whose relative speed is a positive value exists (Step S263; Yes), the determination processing unit 23 next determines whether the minimum distance dnmin of targets whose relative speed is a negative value exists (Step S264), or in other words, whether a target whose relative speed is a negative value exists in the opening/closing detection range of the door for opening/closing detection.

If the minimum distance dnmin of targets whose relative speed is a negative value exists (Step S264; Yes), the determination processing unit 23 determines whether the minimum distance dpmin of targets whose relative speed is a positive value is smaller than the minimum distance dnmin of targets whose relative speed is a negative value (Step S265). If the minimum distance dpmin of targets whose relative speed is a positive value is equal to or greater than the minimum distance dnmin of targets whose relative speed is a negative value (Step S265; No), the determination processing unit 23 resets the door opening determination value n2 (to 0) (Step S271) and returns to the door opening/closing determination processing shown in Fig. 17.

If the minimum distance dnmin of targets whose relative speed is a negative value does not exist (Step S264; No) or, in other words, if a target whose relative speed is a negative value does not exist in the opening/closing detection range of the door for opening/closing detection, or if the minimum distance dnmin of targets whose relative speed is a negative value exists (Step S264; Yes) and also if the minimum distance dpmin of targets whose relative speed is a positive value is smaller than the minimum distance dnmin of targets whose relative speed is a negative value (Step S265; Yes), the determination processing unit 23 next determines whether the minimum distance dzmin of targets whose relative speed is zero exists (Step S266), or in other words, whether a target whose relative speed is zero exists in the opening/closing detection range of the door for opening/closing detection.

If the minimum distance dzmin of targets whose relative speed is zero exists (Step S266; Yes), the determination processing unit 23 determines whether the minimum distance dpmin of targets whose relative speed is a positive value is smaller than the minimum distance dzmin of targets whose relative speed is zero (Step S267). If the minimum distance dpmin of targets whose relative speed is a positive value is equal to or greater than the minimum distance dzmin of targets whose relative speed is zero (Step S267; No), the determination processing unit 23 resets the door opening determination value n2 (to 0) (Step S271) and returns to the door opening/closing determination processing shown in Fig. 17.

If the minimum distance dpmin of targets whose relative speed is a positive value is equal to or greater than the minimum distance dzmin of targets whose relative speed is zero (Step S267; Yes), the determination processing unit 23 sets the door opening determination value n2 to n2 + 1 (Step S268) and determines whether the door opening determination value n2 is equal to or greater than the door opening determination threshold n2th (Step S269). If the door opening determination value n2 is below the door opening determination threshold n2th (Step S269; No), the determination processing unit 23 returns to the door opening/closing determination processing shown in Fig. 17.

If the door opening determination value n2 is equal to or greater than the door opening determination threshold n2th (Step S269; Yes), the determination processing unit 23 determines that the out-swing door as the door for opening/closing detection is in the process of opening and sets the value of the door state flag State to "1" (Step S270).

Then, the determination processing unit 23 resets the door opening determination value n2 (to 0) (Step S271) and returns to the door opening/closing determination processing shown in Fig. 17.

In the door opening determination processing shown in Fig. 18, if a frame where a target whose relative speed is zero does not exist continuously in the specified region in the opening/closing detection range of the door for opening/closing detection and a target whose relative speed is a negative value or zero does not exist in the opening/closing detection range at a closer position than a target whose relative speed is a positive value (the door opening determination value n2) occurs consecutively for a predetermined number (the door opening determination threshold n2th) or more of times, the out-swing door as the door for opening/closing detection is determined to be in the process of opening, and the value of the door state flag State is set to "1" (Step S270). Thus, the out-swing door as the door for opening/closing detection can be determined to have opened if the period of time during which a frame where a target whose relative speed is zero does not exist continuously in the specified region in the opening/closing detection range of the door for opening/closing detection and a target whose relative speed is a negative value or zero does not exist in the opening/closing detection range at a closer position than a target whose relative speed is a positive value occurs consecutively for a predetermined number or more of times is a predetermined period of time or longer.

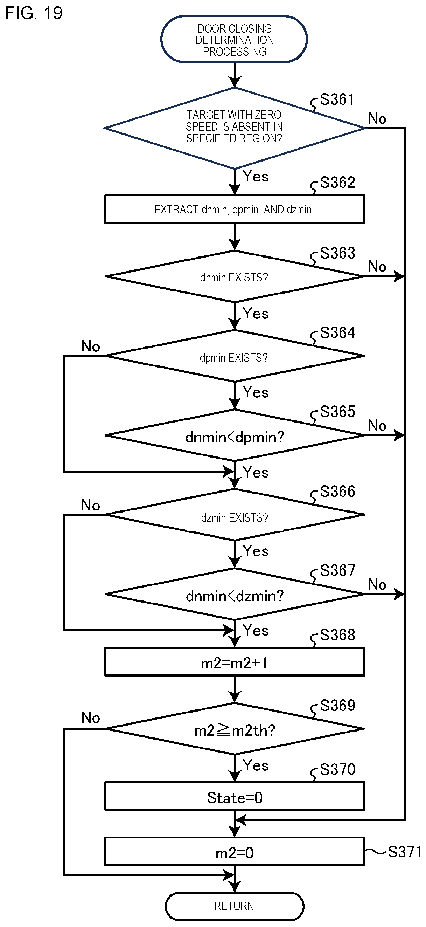

Next, the door closing determination processing (Step S300c) is described with reference to Fig. 19. Fig. 19 is a sub-flowchart showing a fourth example of the door closing determination processing. The door closing determination processing shown in Fig. 19 is on the assumption that a door closing determination threshold m2th is preset and stored in the storage unit 24.

The determination processing unit 23 refers to the relative distance, relative speed, and relative angle of each target stored in the storage unit 24 to determine whether a target whose relative speed is zero is absent in the specified region in the preset opening/closing detection range of the door for opening/closing detection in the preset opening/closing detection range of the door for opening/closing detection (Step S361). If a target whose relative speed is zero is present in the specified region in the opening/closing detection range of the door for opening/closing detection (Step S361; No), the determination processing unit 23 resets the door closing determination value m2 (to 0) (Step S371) and returns to the door opening/closing determination processing shown in Fig. 17.

If a target whose relative speed is zero is absent in the specified region in the opening/closing detection range of the door for opening/closing detection (Step S361; Yes), the determination processing unit 23 extracts the minimum distance dnmin of targets whose relative speed is a negative value, the minimum distance dpmin of targets whose relative speed is a positive value, and the minimum distance dzmin of targets whose relative speed is zero within the preset opening/closing detection range of the door for opening/closing detection (Step S362).

The determination processing unit 23 determines whether the minimum distance dnmin of targets whose relative speed is a negative value exists (Step S363), or in other words, whether a target whose relative speed is a negative value exists in the opening/closing detection range of the door for opening/closing detection.

If the minimum distance dnmin of targets whose relative speed is a negative value does not exist (Step S363; No) or, in other words, if a target whose relative speed is a negative value does not exist in the opening/closing detection range of the door for opening/closing detection, the determination processing unit 23 resets the door closing determination value m2 (to 0) (Step S371) and returns to the door opening/closing determination processing shown in Fig. 17.

If the minimum distance dnmin of targets whose relative speed is a negative value exists (Step S363; Yes), the determination processing unit 23 next determines whether the minimum distance dpmin of targets whose relative speed is a positive value exists (Step S364), or in other words, whether a target whose relative speed is a positive value exists in the opening/closing detection range of the door for opening/closing detection.

If the minimum distance dpmin of targets whose relative speed is a positive value exists (Step S364; Yes), the determination processing unit 23 determines whether the minimum distance dnmin of targets whose relative speed is a negative value is smaller than the minimum distance dpmin of targets whose relative speed is a positive value (Step S365). If the minimum distance dnmin of targets whose relative speed is a negative value is equal to or greater than the minimum distance dpmin of targets whose relative speed is a positive value (Step S365; No), the determination processing unit 23 resets the door closing determination value m2 (to 0) (Step S371) and returns to the door opening/closing determination processing shown in Fig. 17.

If the minimum distance dpmin of targets whose relative speed is a positive value does not exist (Step S364; No) or, in other words, if a target whose relative speed is a positive value does not exist in the opening/closing detection range of the door for opening/closing detection, or if the minimum distance dpmin of targets whose relative speed is a positive value exists (Step S364; Yes) and also if the minimum distance dnmin of targets whose relative speed is a negative value is smaller than the minimum distance dpmin of targets whose relative speed is a positive value (Step S365; Yes), the determination processing unit 23 next determines whether the minimum distance dzmin of targets whose relative speed is zero exists (Step S366), or in other words, whether a target whose relative speed is zero exists in the opening/closing detection range of the door for opening/closing detection.

If the minimum distance dzmin of targets whose relative speed is zero exists (Step S366; Yes), the determination processing unit 23 determines whether the minimum distance dnmin of targets whose relative speed is a negative value is smaller than the minimum distance dzmin of targets whose relative speed is zero (Step S367). If the determination processing unit 23 determines that the minimum distance dnmin of targets whose relative speed is a negative value is equal to or greater than the minimum distance dzmin of targets whose relative speed is zero (Step S367; No), the determination processing unit 23 resets the door closing determination value m2 (to 0) (Step S371) and returns to the door opening/closing determination processing shown in Fig. 17.

If the determination processing unit 23 determines that the minimum distance dnmin of targets whose relative speed is a negative value is equal to or greater than the minimum distance dzmin of targets whose relative speed is zero (Step S367; Yes), the determination processing unit 23 sets the door closing determination value m2 to m2 + 1 (Step S368) and determines whether the door closing determination value m2 is equal to or greater than the door closing determination threshold m2th (Step S369). If the door closing determination value m2 is below the door closing determination threshold m2th (Step S369; No), the determination processing unit 23 returns to the door opening/closing determination processing shown in Fig. 17.

If the door closing determination value m2 is equal to or greater than the door closing determination threshold m2th (Step S369; Yes), the determination processing unit 23 determines that the out-swing door as the door for opening/closing detection is in the process of closing and sets the value of the door state flag State to "0" (Step S370).

Then, the determination processing unit 23 resets the door closing determination value m2 (to 0) (Step S371) and returns to the door opening/closing determination processing shown in Fig. 17.

In the door closing determination processing shown in Fig. 19, if a frame where a target whose relative speed is zero does not exist continuously in the specified region in the opening/closing detection range of the door for opening/closing detection and a target whose relative speed is a positive value or zero does not exist in the opening/closing detection range at a closer position than a target whose relative speed is a negative value (the door closing determination value m2) occurs consecutively for a predetermined number (the door closing determination threshold m2th) or more of times, the out-swing door as the door for opening/closing detection is determined to be in the process of closing, and the value of the door state flag State is set to "0" (Step S370). Thus, the out-swing door as the door for opening/closing detection can be determined to have closed if the period of time during which a frame where a target whose relative speed is zero does not exist continuously in the specified region in the opening/closing detection range of the door for opening/closing detection and a target whose relative speed is a positive value or zero does not exist in the opening/closing detection range at a closer position than a target whose relative speed is a negative value occurs consecutively for a predetermined number or more of times is a predetermined period of time or longer.

Note that although the door opening determination processing (Step S200, S200a, S200b, or S200c) and the door closing determination processing (Step S300, S300a, S300b, or S300c) are executed in parallel in the door opening/closing determination processing in the examples described above, the present disclosure is not limited to this. For example, one of the door opening determination processing (Step S200, S200a, S200b, or S200c) and the door closing determination processing (Step S300, S300a, S300b, or S300c) may be omitted depending on the result of the previous determination by the door opening/closing determination processing.

Specifically, for example, the following mode is possible: once the door is determined to have opened by the door opening determination processing (Step S200, S200a, S200b, or S200c) in the previous door opening/closing determination processing, the door opening determination processing (Step S200, S200a, S200b, or S200c) is not executed until the door is determined to have closed by the door closing determination processing (Step S300, S300a, S300b, or S300c). Also, for example, the following mode is possible: once the door is determined to have closed by the door closing determination processing (Step S300, S300a, S300b, or S300c) in the previous door opening/closing determination processing, the door closing determination processing (Step S300, S300a, S300b, or S300c) is not executed until the door is determined to have opened by the door opening determination processing (Step S200, S200a, S200b, or S200c).

Also, although processing performed in a case where there is a single door for opening/closing detection is described in the door opening/closing determination processing described above, the present disclosure can be applied to a case where a plurality of doors are set as doors for opening/closing detection, by executing the door opening determination processing (Step S200, S200a, S200b, or S200c) and the door opening determination processing (Step S300, S300a, S300b, or S300c) in parallel as needed for each of the plurality of doors for opening/closing detection. In this case, for each of the plurality of doors for opening/closing detection, the opening/closing detection range of the door for opening/closing detection and the correspondences between the moving direction and speed of the door for opening/closing detection are stored in the storage unit 24.

### (Embodiment 2)

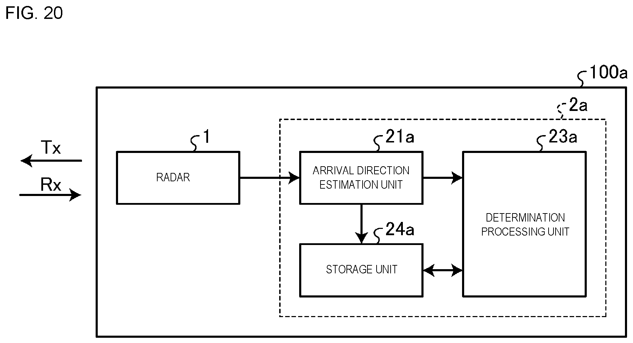

Fig. 20 is a block diagram showing a schematic configuration of a door opening/closing detection apparatus according to Embodiment 2. A door opening/closing detection apparatus 100a according to Embodiment 2 differs from the door opening/closing detection apparatus 100 according to Embodiment 1 in the processing performed by an arrival direction estimation unit 21a and a determination processing unit 23a of a processor 2a. Points different from Embodiment 1 are described in detail, and the same points as Embodiment 1 are not be described below.

Specifically, in the configuration according to Embodiment 2, the arrival direction estimation unit 21a of the processor 2a obtains, in addition to the relative distance, relative speed, and relative angle of each target, the two-dimensional power distributions of the relative distance and the relative angle.

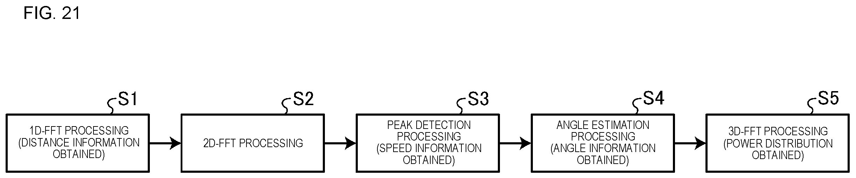

Fig. 21 is a diagram showing a specific example of processing by the arrival direction estimation unit according to Embodiment 2. The arrival direction estimation unit 21a according to Embodiment 2 executes angle estimation processing based on distance information and speed information to obtain the relative angle of a target (Step S4), and after that executes Angle FFT processing (also referred to as "3D-FFT processing") to obtain the power distribution of each of the relative distance and the relative angle (Step S5).

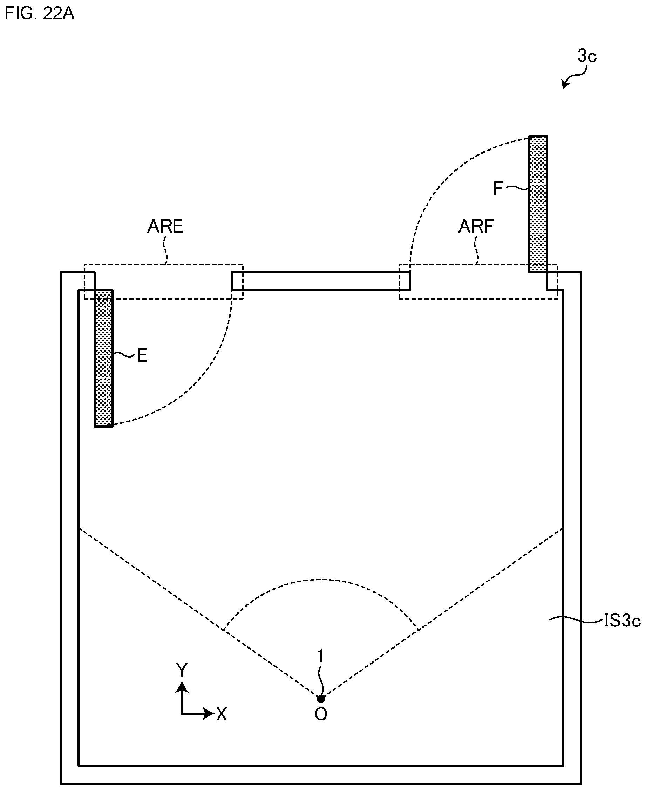

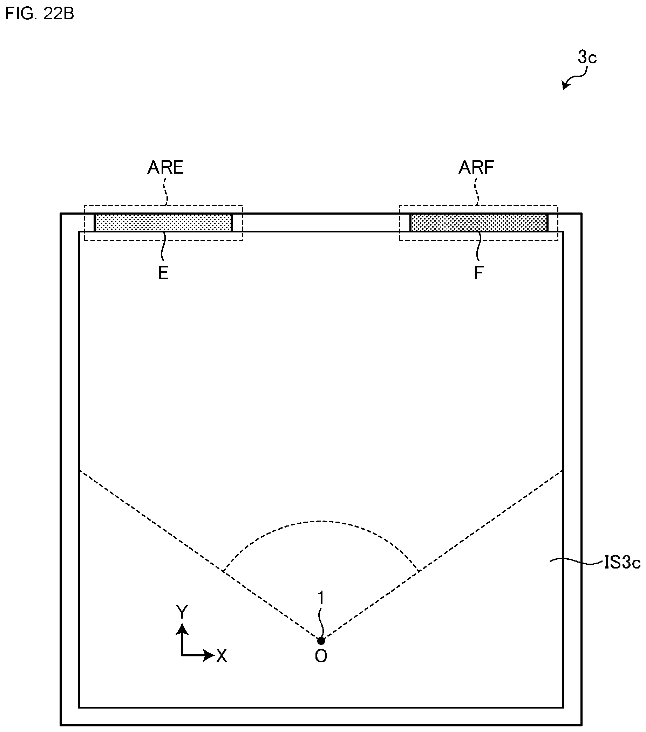

Figs. 22A and 22B are diagrams showing a specific example of an opening/closing detection target of the door opening/closing detection apparatus according to Embodiment 2. As an example, Figs. 22A and 22B show a room 3c with two doors E and F provided within the detection range of the radar 1, the origin O of which is the installation position of the radar 1.

In the example shown in Figs. 22A and 22B, the door E opening inward and the door F opening outward can be set as doors for opening/closing detection. Fig. 22A shows a state where the doors E and F are open, and Fig. 22B shows a state where the doors E and F are closed.

In a case where an opening/closing operation of the door E or F is extremely slow, or in other words, in a case where the relative speed of the target estimated to be a door for opening/closing detection is substantially zero, the door opening/closing determination processing according to Embodiment 1 may fail to correctly detect that the door for opening/closing detection is in the process of opening in the door opening determination processing (Step S200, S200a, S200b, or S200c) or that the door for opening/closing detection is in the process of closing in the door closing determination processing (Step S300, S300a, S300b, or S300c).

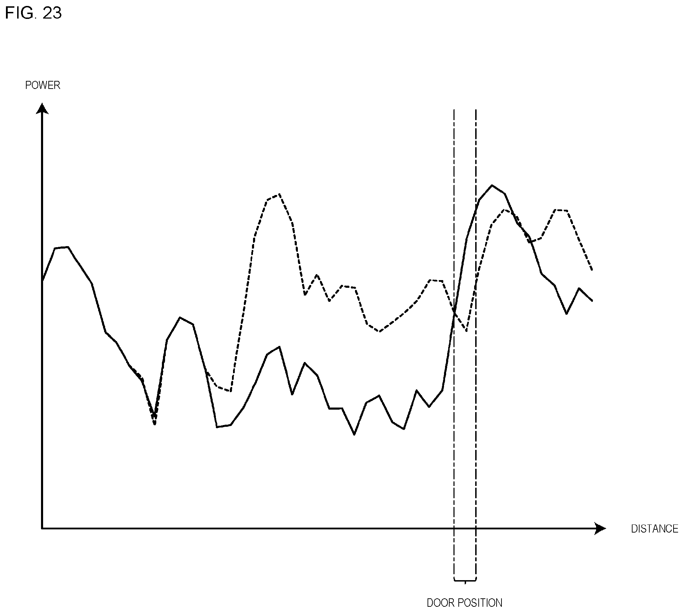

Fig. 23 is a diagram showing an example power distribution in a distance direction. The broken line shown in Fig. 23 represents the power distribution in the state where the door for opening/closing detection is open, and the solid line shown in Fig. 23 represents the power distribution in the state where the door for opening/closing detection is closed.

As shown in Fig. 23, near the position of the door, there is power difference between the power distribution in the state where the door for opening/closing detection is open and the power distribution in the state where the door for opening/closing detection is closed. Specifically, power values near the position of the door in the state where the door for opening/closing detection is closed are larger than power values near the position of the door in the state where the door for opening/closing detection is open.

In other words, by providing a detection range near the position of the door (a detection range ARE of the door E shown in Figs. 22A and 22B or a detection range ARF of the door F shown in Figs. 22A and 22B) and providing a threshold for a power value in the detection range, it is possible to determine the open/closed state of the door for opening/closing detection, or in other words, whether the door for opening/closing detection is open or closed.

The following describes a specific example of the door opening/closing determination processing by the door opening/closing detection apparatus 100a according to Embodiment 2.

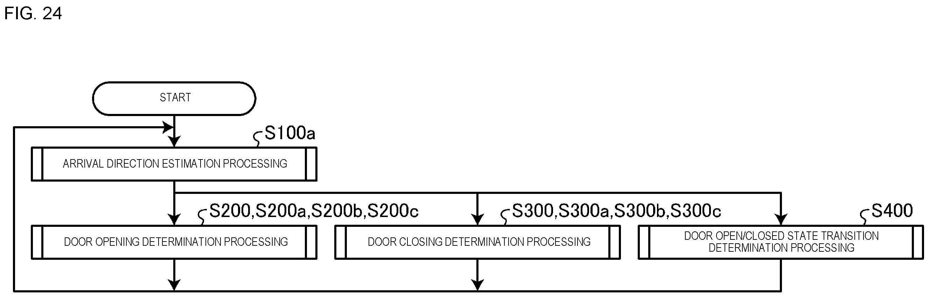

Fig. 24 is a flowchart showing a fifth example of the door opening/closing determination processing. Fig. 24 shows a specific example of the door opening/closing determination processing in a case where a door for opening/closing detection is an in-swing door. Note that, for ease of description, the following describes processing performed in a case where there is a single door for opening/closing detection.

In the fifth example of the door opening/closing determination processing shown in Fig. 24, the door opening/closing detection apparatus 100a according to Embodiment 2 executes arrival direction estimation processing (see Fig. 21) (Step S100a) to obtain the relative distance, relative speed, and relative angle of each target and the two-dimensional power distributions of the relative distance and the relative angle, and after that executes the door opening determination processing (Step S200, S200a, S200b, or S200c), the door closing determination processing (Step S300, S300a, S300b, or S300c), and door open/closed state transition determination processing (Step S400) to be described later in parallel. The door opening/closing determination processing shown in Fig. 24 is executed at a predetermined frame period at which the radar 1 obtains an IF signal.

In Embodiment 2, the arrival direction estimation processing (Step S100a) is processing executed by the arrival direction estimation unit 21a of the processor 2a. The arrival direction estimation unit 21a stores, in a storage unit 24a, the relative distance, relative speed, and relative angle of each target and the two-dimensional power distributions of the relative distance and the relative angle obtained.

Also, in the fifth example of the door opening/closing determination processing shown in Fig. 24, the door opening determination processing (Step S300), the door closing determination processing (Step S400), and the door open/closed state transition determination processing (Step S400) are processing executed by the determination processing unit 23a of the processor 2a.

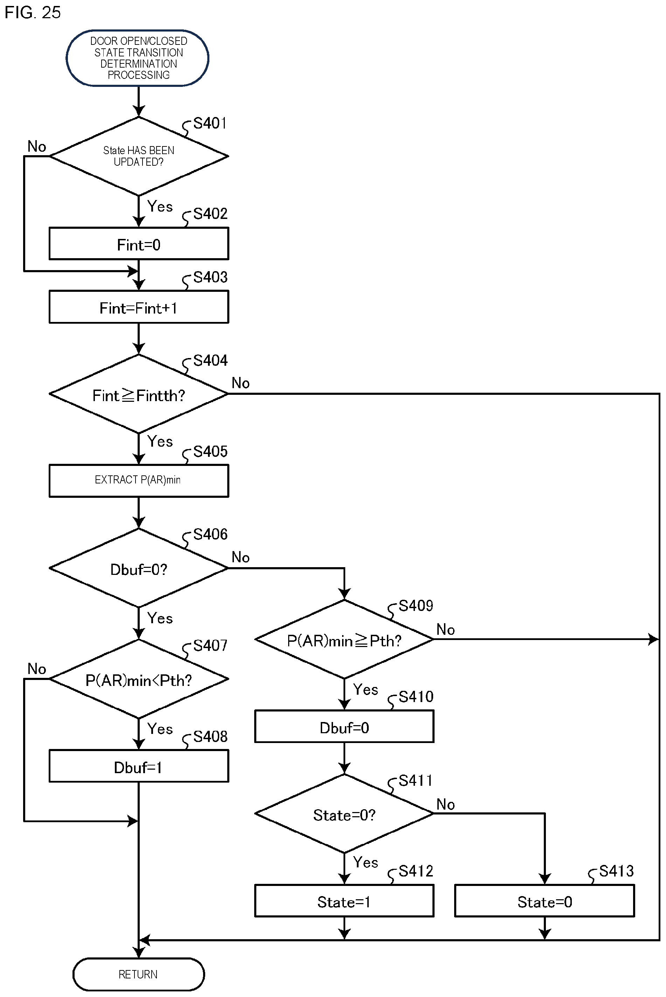

The door open/closed state transition determination processing (Step S400) is described below with reference to Fig. 25. Fig. 25 is a sub-flowchart showing an example of the door open/closed state transition determination processing.

The door open/closed state transition determination processing shown in Fig. 25 is on the assumption that a detection range AR of a door for opening/closing detection and a power threshold Pth for a minimum power value P(AR)min in the detection range AR of the door for opening/closing detection are preset and stored in the storage unit 24a.

First, the determination processing unit 23a determines whether the value of the door state flag State has been updated from the previous value (Step S401). If the value of the door state flag State has been updated from the previous value (Step S401; Yes), the determination processing unit 23a sets the value of a frame interval Fint to "0" (Step S402) and after that sets the frame interval Fint to Fint + 1 (Step S403). If the value of the door state flag State has not been updated from the previous value (Step S401; No), the determination processing unit 23a sets the frame interval Fint to Fint + 1 (Step S403).

In the present disclosure, the frame interval Fint represents the number of times the door opening/closing determination processing has been executed since an update of the value of the door state flag State, or in other words, the number of times the door opening/closing determination processing has been executed since the door opening determination processing (Step S200, S200a, S200b, or S200c) determined that the door for opening/closing detection had opened (the door state flag State = 1) or the number of times the door opening/closing determination processing has been executed since the door closing determination processing (Step S300, S300a, S300b, or S300c) determined that the door for opening/closing detection had closed (the door state flag State = 0). Thus, the value of the frame interval Fint corresponds to the period of time elapsed after the door is determined to be open (the door state flag State = 1) or closed (the door state flag State = 0). The value of the frame interval Fint is temporarily stored in the storage unit 24a. Also, it is assumed that a predetermined frame interval count Fintth is preset and stored in the storage unit 24a as a threshold for the value of the frame interval Fint.

The determination processing unit 23a determines whether the value of the frame interval Fint is equal to or greater than the predetermined frame interval count Fintth (Step S404). If the value of the frame interval Fint is below the frame interval count Fintth (Step S404; No), the determination processing unit 23a returns to the door opening/closing determination processing shown in Fig. 24.

If the value of the frame interval Fint is equal to or greater than the frame interval count Fintth (Step S404; Yes), the determination processing unit 23a refers to the two-dimensional power distributions of the relative distance and the relative angle stored in the storage unit 24a and extracts the minimum power value P(AR)min within the preset detection range AR (Step S405).

Next, the determination processing unit 23a determines whether the value of a door state buffer Dbuf is "0" (Step S406).

In the present disclosure, the door state buffer Dbuf represents the open/closed state of the door for opening/closing detection determined by the door open/closed state transition determination processing (Step S400). Specifically, when the door state buffer Dbuf is 0, it means that the door open/closed state transition determination processing (Step S400) has detected that the door for opening/closing detection is closed. Also, when the door state buffer Dbuf is 1, the door open/closed state transition determination processing (Step S400) has detected that the door for opening/closing detection is open. The door state buffer Dbuf is temporarily stored in the storage unit 24a.

If the value of the door state buffer Dbuf is 0 (Step S406; Yes), the determination processing unit 23a determines whether the minimum power value P(AR)min extracted in Step S405 is below the power threshold Pth (Step S407). If the minimum power value P(AR)min is equal to or greater than the power threshold Pth (Step S407; No), the determination processing unit 23a determines that the door for opening/closing detection is closed (hereinafter also referred to as a "closed state") and returns to the door opening/closing determination processing shown in Fig. 24.

If the minimum power value P(AR)min is below the power threshold Pth (Step S407; Yes), the determination processing unit 23a determines that the door for opening/closing detection is open (hereinafter also referred to as an "open state"), sets the value of the door state buffer Dbuf to "1" (Step S408), and returns to the door opening/closing determination processing shown in Fig. 24.

If the value of the door state buffer Dbuf is 1 (Step S406; No), the determination processing unit 23a determines whether the minimum power value P(AR)min extracted in Step S405 is equal to or greater than the power threshold Pth (Step S409). If the minimum power value P(AR)min is below the power threshold Pth (Step S409; No), the determination processing unit 23a determines that the door is in an open state and returns to the door opening/closing determination processing shown in Fig. 24.

If the minimum power value P(AR)min is equal to or greater than the power threshold Pth (Step S409; Yes), the determination processing unit 23a determines that the door is in a closed state, sets the value of the door state buffer Dbuf to "0" (Step S410), and then determines whether the value of the door state flag State is "0" (Step S411).

If the door state flag State is 0 (Step S411; Yes), the determination processing unit 23a sets the value of the door state flag State to "1" (Step S412), and returns to the door opening/closing determination processing shown in Fig. 24.

If the door state flag State is 1 (Step S411; No), the determination processing unit 23a sets the value of the door state flag State to "0" (Step S413) and returns to the door opening/closing determination processing shown in Fig. 24.

In the door open/closed state transition determination processing shown in Fig. 25, the door state flag State is updated (Step S412 or S413) if the door is not determined to be in an open state by the door opening determination processing (Step S200, S200a, S200b, or S200c) or in a closed state by the door closing determination processing (Step S300, S300a, S300b, or S300c) and also if the processing in Steps S405 to S413 detects state transitions of the door for opening/closing detection of a "closed state", an "open state", and a "closed state" after the predetermined frame interval count Fintth has been exceeded since an update of the value of the door state flag State (Step S404; Yes) or in other words after a period of time corresponding to the predetermined frame interval count Fintth has passed since the update of the value of the door state flag State.

Thus, for example, if the door opening determination processing (Step S200, S200a, S200b, or S200c) fails to correctly determine that the door is in an open state (the door state flag State = 1) after the door closing determination processing (Step S300, S300a, S300b, or S300c) correctly determines that the door is in a closed state (door state flag State = 0), the determination can be corrected using the determination result of the door open/closed state transition determination processing (Step S400) to determine that the door is in an open state (door state flag State = 1) (Step S412).

Further, it is possible to prevent erroneous correction from being made in a case where the door opening determination processing (Step S200, S200a, S200b, or S200c) correctly determines that the door is in an open state (the door state flag State = 1).

Also, for example, if the door closing determination processing (Step S300, S300a, S300b, or S300c) fails to correctly determine that the door is in a closed state (the door state flag State = 0) after the door opening determination processing (Step S200, S200a, S200b, or S200c) correctly determines that the door is in an open state (door state flag State = 1), the determination can be corrected using the determination result of the door open/closed state transition determination processing (Step S400) to determine that the door is in a closed state (door state flag State = 0) (Step S413).

Further, it is possible to prevent erroneous correction from being made in a case where the door closing determination processing (Step S300, S300a, S300b, or S300c) correctly determines that the door is in a closed state (the door state flag State = 0).

It should be noted that the embodiments described above have been provided to facilitate understanding of the present disclosure and are not to be construed as limiting the present invention. The present disclosure may be modified or improved without departing from the gist thereof, and the present disclosure includes such equivalents as well.

The present disclosure can implement a door opening/closing detection apparatus and a door opening/closing detection method that can properly determine entry to or exit from a room by detecting the open/closed state of a door.

### Reference Signs List

1 radar
2, 2a processor
21, 21a arrival direction estimation unit
23, 23a determination processing unit
24, 24a storage unit
100, 100a door opening/closing detection apparatus

## Claims

1. A door opening/closing detection apparatus comprising:
a sensor capable of obtaining information on a relative position of a target;
an arrival direction estimation unit configured to estimate a relative distance, a relative speed, and a relative angle of the target to the sensor based on transmission and reception signals of the sensor; and
a determination processing unit configured to determine an open/closed state of a door based at least on the relative distance and the relative speed.

2. The door opening/closing detection apparatus according to claim 1, wherein
the sensor includes a radar configured to transmit a chirp signal with linear frequency modulation and receive a reflected wave reflected by the target and to generate an IF signal by combining a received wave and a transmitted wave.

3. The door opening/closing detection apparatus according to claim 2, wherein
the arrival direction estimation unit estimates the relative distance, the relative speed, and the relative angle based on the IF signal.

4. The door opening/closing detection apparatus according to claim 3, wherein
the radar is installed inside a room provided with a door for opening/closing detection whose open/closed state is to be determined by the determination processing unit, and
an opening/closing detection range including at least a motion range of the door for opening/closing detection and correspondences between a moving direction and a speed of the door for opening/closing detection are preset in the determination processing unit.

5. The door opening/closing detection apparatus according to claim 4, wherein
the determination processing unit determines that the door for opening/closing detection has opened if a target whose relative speed is a positive value or zero does not exist in the opening/closing detection range at a closer position than a target whose relative speed is a negative value, and
the determination processing unit determines that the door for opening/closing detection has closed if a target whose relative speed is a negative value or zero does not exist in the opening/closing detection range at a closer position than a target whose relative speed is a positive value.

6. The door opening/closing detection apparatus according to claim 4, wherein
the determination processing unit determines that the door for opening/closing detection has opened if a target whose relative speed is zero does not exist in a specified region in the opening/closing detection range and also if a target whose relative speed is a negative value or zero does not exist in the opening/closing detection range at a closer position than a target whose relative speed is a positive value, and
the determination processing unit determines that the door for opening/closing detection has closed if a target whose relative speed is zero does not exist in the specified region in the opening/closing detection range and also if a target whose relative speed is a positive value or zero does not exist in the opening/closing detection range at a closer position than a target whose relative speed is a negative value.

7. The door opening/closing detection apparatus according to claim 4, wherein
the determination processing unit detects a duration during which a target whose relative speed is a positive value or zero does not exist in the opening/closing detection range at a closer position than a target whose relative speed is a negative value and determines that the door for opening/closing detection has opened if a ratio of this duration to a predetermined duration is equal to or greater than a predetermined value, and
the determination processing unit detects a duration during which a target whose relative speed is a negative value or zero does not exist in the opening/closing detection range at a closer position than a target whose relative speed is a positive value and determines that the door for opening/closing detection has closed if a ratio of this duration to a predetermined duration is equal to or greater than a predetermined value.

8. The door opening/closing detection apparatus according to claim 4, wherein
the determination processing unit detects a duration during which a target whose relative speed is zero does not exist in a specified region in the opening/closing detection range and also a target whose relative speed is a negative value or zero does not exist at a closer position than a target whose relative speed is a positive value and determines that the door for opening/closing detection has opened if a ratio of this duration to a predetermined duration is equal to or greater than a predetermined value, and
the determination processing unit detects a duration during which a target whose relative speed is zero does not exist in the specified region in the opening/closing detection range and also a target whose relative speed is a positive value or zero does not exist at a closer position than a target whose relative speed is a negative value and determines that the door for opening/closing detection has closed if a ratio of this duration to a predetermined duration is equal to or greater than a predetermined value.

9. The door opening/closing detection apparatus according to claim 4, wherein
the determination processing unit determines that the door for opening/closing detection has opened if a state where a target whose relative speed is a positive value or zero does not exist in the opening/closing detection range at a closer position than a target whose relative speed is a negative value continues for a predetermined duration or longer, and
the determination processing unit determines that the door for opening/closing detection has closed if a state where a target whose relative speed is a negative value or zero does not exist in the opening/closing detection range at a closer position than a target whose relative speed is a positive value continues for a predetermined duration or longer.

10. The door opening/closing detection apparatus according to claim 4, wherein
the determination processing unit determines that the door for opening/closing detection has opened if a state where a target whose relative speed is zero does not exist in a specified region in the opening/closing detection range and also a target whose relative speed is a negative value or zero does not exist at a closer position than a target whose relative speed is a positive value continues for a predetermined duration or longer, and
the determination processing unit determines that the door for opening/closing detection has closed if a state where a target whose relative speed is zero does not exist in the specified region in the opening/closing detection range and also a target whose relative speed is a positive value or zero does not exist at a closer position than a target whose relative speed is a negative value continues for a predetermined duration or longer.

11. A door opening/closing detection method comprising:
an estimation step of estimating, based on transmission and reception signals of a sensor capable of obtaining information on a relative position of a target, a relative distance, a relative speed, and a relative angle of the target to the sensor, and
a determination step of determining an open/closed state of a door based at least on the relative distance and the relative speed.

12. The door opening/closing detection method according to claim 11, wherein
the estimation step includes
a step of transmitting a chirp signal with linear frequency modulation,
a step of receiving a reflected wave reflected by the target,
a step of generating an IF signal by combining a received wave and a transmitted wave, and
a step of estimating the relative distance, the relative speed, and the relative angle based on the IF signal.

13. The door opening/closing detection method according to claim 11 or 12, wherein
an opening/closing detection range of a door for opening/closing detection whose open/closed state is to be determined in the estimation step, and correspondences between a moving direction and a speed of the door for opening/closing detection are preset, and
the opening/closing detection range includes at least a motion range of the door for opening/closing detection.

14. The door opening/closing detection method according to claim 13, wherein
the determination step includes
a door opening determination step of determining that the door for opening/closing detection has opened if a target whose relative speed is a positive value or zero does not exist in the opening/closing detection range of the door for opening/closing detection at a closer position than a target whose relative speed is a negative value and
a door closing determination step of determining that the door for opening/closing detection has closed if a target whose relative speed is a negative value or zero does not exist in the opening/closing detection range at a closer position than a target whose relative speed is a positive value.

15. The door opening/closing detection method according to claim 13, wherein
the determination step includes
a door opening determination step of determining that the door for opening/closing detection has opened if a target whose relative speed is zero does not exist in a specified region in the opening/closing detection range of the door for opening/closing detection and also if a target whose relative speed is a negative value or zero does not exist at a closer position than a target whose relative speed is a positive value and
a door closing determination step of determining that the door for opening/closing detection has closed if a target whose relative speed is zero does not exist in the specified region in the opening/closing detection range and also if a target whose relative speed is a positive value or zero does not exist at a closer position than a target whose relative speed is a negative value.

16. The door opening/closing detection method according to claim 13, wherein
the determination step includes
a door opening determination step of detecting a duration during which a target whose relative speed is a positive value or zero does not exist in the opening/closing detection range of the door for opening/closing detection at a closer position than a target whose relative speed is a negative value and determining that the door for opening/closing detection has opened if a ratio of this duration to a predetermined duration is equal to or greater than a predetermined value and
a door closing determination step of detecting a duration during which a target whose relative speed is a negative value or zero does not exist in the opening/closing detection range at a closer position than a target whose relative speed is a positive value and determining that the door for opening/closing detection has closed if a ratio of this duration to a predetermined duration is equal to or greater than a predetermined value.

17. The door opening/closing detection method according to claim 13, wherein
the determination step includes
a door opening determination step of detecting a duration during which a target whose relative speed is zero does not exist in a specified region in the opening/closing detection range of the door for opening/closing detection and also a target whose relative speed is a negative value or zero does not exist at a closer position than a target whose relative speed is a positive value and determining that the door for opening/closing detection has opened if a ratio of this duration to a predetermined duration is equal to or greater than a predetermined value and
a door closing determination step of detecting a duration during which a target whose relative speed is zero does not exist in the specified region in the opening/closing detection range and also a target whose relative speed is a positive value or zero does not exist at a closer position than a target whose relative speed is a negative value and determining that the door for opening/closing detection has closed if a ratio of this duration to a predetermined duration is equal to or greater than a predetermined value.

18. The door opening/closing detection method according to claim 13, wherein
the determination step includes
a door opening determination step of determining that the door for opening/closing detection has opened if a state where a target whose relative speed is a positive value or zero does not exist in the opening/closing detection range of the door for opening/closing detection at a closer position than a target whose relative speed is a negative value continues for a predetermined duration or longer and
a door closing determination step of determining that the door for opening/closing detection has closed if a state where a target whose relative speed is a negative value or zero does not exist in the opening/closing detection range at a closer position than a target whose relative speed is a positive value continues for a predetermined duration or longer.

19. The door opening/closing detection method according to claim 13, wherein
the determination step includes
a door opening determination step of determining that the door for opening/closing detection has opened if a state where a target whose relative speed is zero does not exist in a specified region in the opening/closing detection range of the door for opening/closing detection and also a target whose relative speed is a negative value or zero does not exist at a closer position than a target whose relative speed is a positive value continues for a predetermined duration or longer and
a door closing determination step of determining that the door for opening/closing detection has closed if a state where a target whose relative speed is zero does not exist in the specified region in the opening/closing detection range and also a target whose relative speed is a positive value or zero does not exist at a closer position than a target whose relative speed is a negative value continues for a predetermined duration or longer.
